(19) Europäisches Patentamt
European Patent Office
Office européen des brevets

(11) EP 2 136 426 A1

(12) **EUROPEAN PATENT APPLICATION**
published in accordance with Art. 153(4) EPC

(43) Date of publication:
**23.12.2009 Bulletin 2009/52**

(21) Application number: **08721747.7**

(22) Date of filing: **10.03.2008**

(51) Int Cl.:
***H01M 4/90*** *(2006.01)* ***H01M 8/02*** *(2006.01)*
***H01M 8/10*** *(2006.01)*

(86) International application number:
**PCT/JP2008/054331**

(87) International publication number:
**WO 2008/111570 (18.09.2008 Gazette 2008/38)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **09.03.2007 JP 2007061040**
**28.03.2007 JP 2007084371**

(71) Applicant: **Sumitomo Chemical Company, Limited**
**Tokyo 104-8260 (JP)**

(72) Inventors:
- **KOSHINO, Nobuyoshi**
  **Tsukuba-shi**
  **Ibaraki 305-0821 (JP)**
- **SHINODA, Hiroshi**
  **Tsukuba-shi**
  **Ibaraki 305-0821 (JP)**
- **SAITO, Shin**
  **Tsukuba-shi**
  **Ibaraki 305-0005 (JP)**
- **HIGASHIMURA, Hideyuki**
  **Tsukuba-shi**
  **Ibaraki 305-0045 (JP)**
- **SAKAI, Taiga**
  **Tsukuba-shi**
  **Ibaraki 305-0821 (JP)**

(74) Representative: **Vossius & Partner**
**Siebertstrasse 4**
**81675 München (DE)**

# (54) MEMBRANE-ELECTRODE ASSEMBLY AND FUEL CELL USING THE MEMBRANE-ELECTRODE ASSEMBLY

(57) A membrane-electrode assembly, containing an electrode catalyst containing a base metal complex, in which exchange current density $i_0$ obtained from a Tafel plot, which is related to current density and voltage, is $5.0 \times 10^{-4}$ $Acm^{-2}$ or more, and in which a Tafel slope obtained from the Tafel plot is 450 mV/decade or less; and a membrane-electrode assembly, containing catalyst layers each containing an electrode catalyst on both sides of an electrolyte membrane, in which at least one of the catalyst layers comprises a non-noble metal-based electrode catalyst, and in which the electrolyte membrane is a hydrocarbon-based electrolyte membrane.

EP 2 136 426 A1

## Description

### TECHNICAL FIELD

The present invention relates to a membrane-electrode assembly, and a fuel battery using the same. More specifically, the present invention relates to a membrane-electrode assembly having an electrode catalyst in which a base metal complex is used, and a fuel battery using the same. Furthermore, the present invention relates to a membrane-electrode assembly having a non-noble metal-based electrode catalyst and a hydrocarbon-based electrolyte membrane, and a fuel battery using the same.

### BACKGROUND ART

In solid polymer type fuel batteries and direct methanol type fuel batteries that are being developed at present so as to be put to practical use, as an electrode catalyst thereof, platinum is generally used. However, there remain problems that platinum is high in costs and resources thereof will be depleted in the future since the reserve thereof is limited, and other problems.
As an example wherein a catalyst alternative to platinum is used as an electrode catalyst of a fuel battery, for example, Rajesh Bashyam, Piotr Zelenay, "Nature", Vol. 443, pp. 63-66 (2006) describes a membrane-electrode assembly wherein a cobalt/polypyrrole/carbon complex is used as an electrode catalyst. Moreover, Jun Maruyama, Ikuo Abe, "Chemistry of Materials", Vol. 18, No. 5, pp. 1303-1311 (2006) describes a membrane-electrode assembly wherein a hemoglobin carbide is used as an electrode catalyst.
However, the power generation property of membrane-electrode assembles as disclosed in Rajesh Bashyam, Piotr Zelenay, "Nature", Vol. 443, pp. 63-66 (2006) and Jun Maruyama, Ikuo Abe, "Chemistry of Materials", Vol. 18, No. 5, pp. 1303-1311 (2006) is considerably lower than that of membrane-electrode assemblies wherein a platinum catalyst is used. Thus, it has been desired that the power generation property is improved.
Further, as an example wherein a catalyst alternative to platinum is used as an electrode catalyst of a fuel battery, for example, JP-A-2006-260909 ("JP-A" means unexamined published Japanese patent application) describes a membrane-electrode assembly wherein palladium is used as an electrode catalyst. Moreover, "Journal of Power Sources", Vol. 153, pp. 11-17 (2006) discloses a membrane-electrode assembly wherein ruthenium is used as an electrode catalyst.
However, electrode catalysts as disclosed in JP-A-2006-260909 and "Journal of Power Sources", Vol. 153, pp. 11-17 (2006) are each made of a noble metal, and it is expected that a stable supply thereof will not be certainly kept with ease in the future in the same manner as that of platinum.
As an example wherein a material other than noble metals is used as an electrode catalyst, for example, "Nature", Vol. 443, pp. 63-66 (2006) describes a membrane-electrode assembly wherein a cobalt/pyrrole/carbon complex is used as an electrode catalyst. Additionally, "Chemistry of Materials", Vol. 18, No. 5, pp. 1303-1311 (2006) describes a membrane-electrode assembly wherein a hemoglobin carbide is used as an electrode catalyst.
In any one of the above-mentioned membrane-electrode assemblies, a fluorine-based electrolyte membrane, a typical example of which is a Nafion membrane (registered trademark) is used, and the fluorine-based electrolyte membrane has a problem that the cost thereof is comparatively high since fluorine is used.
Additionally, the fluorine-based electrolyte membrane has a following problem and other problems: in attendance on the use of the membrane as a member of a fuel battery, fluorine ions elute out from the membrane so that the membrane is deteriorated or members of the fuel battery which are different from the membrane are corroded. Thus, it cannot yet be mentioned that membrane-electrode assemblies wherein this membrane is used has sufficient stability.

### DISCLOSURE OF INVENTION

According to the present invention, there can be provided a membrane-electrode assembly and a fuel battery wherein a catalyst alternative to platinum is used to give a high power generation property.
Further, according to the present invention, there can be provided a membrane-electrode assembly inexpensive and excellent in stability, and a fuel battery using the same.
According to the present invention, there is provided the following means:

[1] A membrane-electrode assembly, comprising an electrode catalyst containing a base metal complex, wherein exchange current density $i_0$ obtained from a Tafel plot, which is related to current density and voltage, is $5.0 \times 10^{-4}$ $Acm^{-2}$ or more, and wherein a Tafel slope obtained from the Tafel plot is 450 mV/decade or less.
[2] The membrane-electrode assembly according to [1], wherein the base metal complex is a base metal complex comprising, as a ligand,

a compound having two or more phenol rings and two or more aromatic heterocycles.

[3] The membrane-electrode assembly according to [1] or [2], wherein the base metal complex is a base metal complex comprising a base metal atom selected from the group consisting of vanadium, chromium, manganese, iron, cobalt, nickel, copper, zirconium, niobium, molybdenum, tantalum and tungsten.

[4] The membrane-electrode assembly according to any one of [1] to [3], wherein the number of base metal atoms contained in one molecule of the base metal complex is 1 or more and 1fl or less.

[5] The membrane-electrode assembly according to any one of [1] to [4], wherein the electrode catalyst containing a base metal complex is a catalyst subjected to heating treatment at a temperature of 300°C or higher and 1200°C or lower.

[6] A fuel battery, comprising the membrane-electrode assembly according to any one of [1] to [5].

[7] A membrane-electrode assembly, comprising catalyst layers each containing an electrode catalyst on both sides of an electrolyte membrane, wherein at least one of the catalyst layers comprises a non-noble metal-based electrode catalyst, and wherein the electrolyte membrane is a hydrocarbon-based electrolyte membrane.

[8] The membrane-electrode assembly according to [7], wherein the non-noble metal-based electrode catalyst is an electrode catalyst comprising a non-noble metal complex.

[9] The membrane-electrode assembly according to [7] or [8], wherein the hydrocarbon-based electrolyte membrane comprises an aromatic hydrocarbon-based polymer electrolyte.

[10] The membrane-electrode assembly according to any one of [7] to [9], wherein the hydrocarbon-based electrolyte membrane is an aromatic hydrocarbon-based electrolyte membrane having proton conductivity.

[11] A fuel battery, comprising the membrane-electrode assembly according to any one of [7] to [10].

Hereinafter, a first embodiment of the present invention means to include the membrane-electrode assembly described in [1] to [5], the fuel battery described in [6].
A second embodiment of the present invention means to includes the membrane-electrode assembly described in [7] to [10], the fuel battery described in [11].
Herein, the present invention means to include all of the above first and second embodiments, unless otherwise specified.
Other and further features and advantages of the invention will appear more fully from the following description, appropriately referring to the accompanying drawings.

BRIEF DESCRIPTION OF THE DRAWINGS

[Fig. 1] Fig. 1 shows a vertical sectional view of a cell of a fuel battery of a preferred embodiment of the present invention.

[Fig. 2] Fig. 2 shows a current-potential curve of the fuel battery cell comprising the membrane-electrode assembly in Example 1.

[Fig. 3] Fig. 3 shows a Tafel plot of the fuel battery cell comprising the membrane- electrode assembly in Examples 1.

[Fig. 4] Fig. 4 shows a current-potential curve of the fuel battery cell comprising the membrane-electrode assembly in Example 2.

[Fig. 5] Fig. 5 shows a plot of current density of the fuel battery cell comprising the membrane-electrode assembly in Example 3 relative to elapsing time.

[Fig. 6] Fig. 6 shows a current-potential curve of the fuel battery cell comprising the membrane-electrode assembly in Example 3.

[Fig. 7] Fig. 7 shows a current-potential curve of the fuel battery cell comprising the membrane-electrode assembly in Example 4.

BEST MODE FOR CARRYING OUT THE INVENTION

The present invention will be descried in detail hereinafter.

(About Membrane-Electrode Assembly of First Embodiment)

[Membrane-electrode assembly]

A membrane-electrode assembly (hereinafter also referred to as an "MEA") of the first embodiment of the present invention is made of an electrolyte membrane and an electrode catalyst, and has, on each of both sides of the electrolyte membrane, the electrode catalyst.

The membrane-electrode assembly of the first embodiment of the present invention comprises the electrode catalyst containing a base metal complex.

(Electrode catalyst)

(Electrode catalyst)

The base metal complex used as the electrode catalyst in the membrane-electrode assembly of the first embodiment of the present invention is a metal complex containing base metal atoms. The base metal atoms may have no electric charges, or may be metal ions which are electrically charged.

As used herein, the base metal is a metal other than a noble atom such as gold, silver, ruthenium, rhodium, palladium, osmium, iridium, and platinum, as described in "Chemical Dictionary" (1st edition, 1994, Tokyo Kagaku Dozin Co., Ltd).

Specific examples of the base metal atom include lithium, beryllium, sodium, magnesium, aluminum, potassium, calcium, scandium, titanium, vanadium, chromium, manganese, iron, cobalt, nickel, copper, zinc, gallium, rubidium, strontium, yttrium, zirconium, niobium, molybdenum, cadmium, indium, tin, antimony, tellurium, cesium, barium, lanthanum, cerium, praseodymium, neodymium, samarium, europium, gadolinium, terbium, dysprosium, holmium, erbium, thulium, ytterbium, lutetium, hafnium, tantalum, tungsten, rhenium, mercury, thallium, lead, and bismuth.

Among these, scandium, titanium, vanadium, chromium, manganese, iron, cobalt, nickel, copper, zinc, gallium, yttrium, zirconium, niobium, molybdenum, lanthanum, cerium, praseodymium, neodymium, samarium, europium, gadolinium, terbium, dysprosium, holmium, erbium, thulium, ytterbium, lutetium, hafnium, tantalum, tungsten, and rhenium can be preferably used in the present invention.

More preferable examples are scandium, titanium, vanadium, chromium, manganese, iron, cobalt, nickel, copper, zinc, gallium, yttrium, zirconium, niobium, molybdenum, lanthanum, cerium, praseodymium, neodymium, samarium, europium, gadolinium, terbium, dysprosium, holmium, erbium, thulium, ytterbium, lutetium, hafnium, tantalum, tungsten and rhenium; even more preferable examples are vanadium, chromium, manganese, iron, cobalt, nickel, copper, zirconium, niobium, molybdenum, tantalum, and tungsten.

Among these atoms, particularly preferable examples are base metal atoms selected from a group consisting of vanadium, chromium, manganese, iron, cobalt, nickel, and copper.

The base metal complex used in the first embodiment of the present invention has one, or two or more base metal atoms selected from the above examples and the number of base metal atoms is preferably 30 or less, more preferably 1 to 10, furthermore preferably 1 to 3, and particularly preferably 1 or 2.

Preferred examples of the base metal complex used in the first embodiment of the present invention include Schiff base meta! complexes, aromatic-hydrocarbon- and/or heterocycle-containing metal complexes, porphyrin metal complexes, porphycene metal complexes, porphyrazine metal complexes, phthalocyanine metal complexes, naphthalocyanine metal complexes, and derivatives of these metal complexes.

The base metal complex used in the first embodiment of the present invention is in particular preferably a base metal complex having, as a ligand, a compound having two or more phenol rings (phenol and/or derivatives thereof), and two or more aromatic heterocycles.

Preferred examples of this ligand include a compound represented by the following formula (I) or (II).

Formula (I)

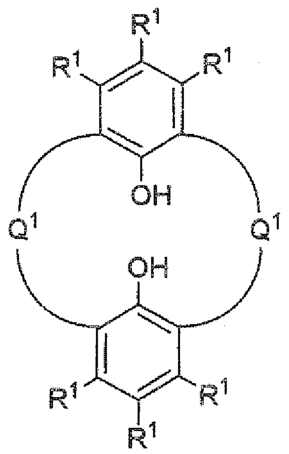

Formula (II)

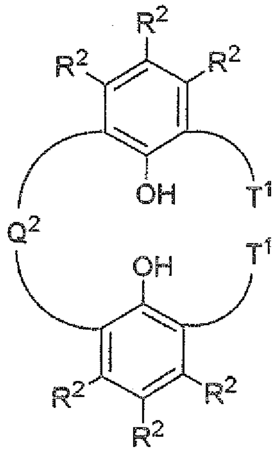

In the formulae (I) and (II), $Q^1$ and $Q^2$ each represent a bivalent aromatic heterocyclic group, and $Q^1$s may be the same or different from each other. $T^1$ represents a monovalent aromatic heterocyclic group, and $T^1$s may be the same or different from each other. $R^1$ and $R^2$ each represent a hydrogen atom or a substituent, and $R^1$s and $R^2$s may be the same or different from each other. Adjacent ones of $R^1$s or $R^2$s may be linked with each other to form a ring.

The hydroxy group (OH) in the formulae (1) and (II) may be a phenolate group from which a proton is released and may coordinate with metal atom(s).

Examples of the substituent represented by $R^1$ or $R^2$ in the above formula (I) or (II) include a hydroxyl group, an amino group, a nitro group, a cyano group, a carboxyl group, a formyl group, a sulfonyl group, a halogen atom, a monovalent hydrocarbon group which may be substituted, a hydrocarbyloxy group which may be substituted (hydrocarbon oxy group which may be substituted), an amino group substituted with two monovalent hydrocarbon groups which may be unsubstituted or substituted (namely, hydrocarbon-disubstituted amino group which may be substituted), a hydrocarbylmercapto group which may be substituted (hydrocarbon mercapto group which may be substituted), a hydrocarbylcarbonyl group which may be substituted (hydrocarbon carboxyl group which may be substituted), a hydrocarbyloxycarbonyl group which may be substituted (hydrocarbon oxycarbonyl group which may be substituted), an aminocarbonyl group substituted with two monovalent hydrocarbon groups which may be unsubstituted or substituted (namely, hydrocarbon-disubstituted aminocarbonyl group which may be substituted) and a hydrocarbyloxysulfonyl group which may be substituted (hydrocarbon sulfonyl group which may be substituted).

Among these groups, a monovalent hydrocarbon group which may be substituted, a hydrocarbyloxy group which may be substituted, an amino group substituted with two monovalent hydrocarbon groups which may be unsubstituted or substituted, a hydrocarbylmercapto group which may be substituted, a hydrocarbylcarbonyl group which may be substituted and a hydrocarbyloxycarbonyl group which may be substituted are preferable; a monovalent hydrocarbon group which may be substituted, a hydrocarbyloxy group which may be substituted and an amino group substituted with two monovalent hydrocarbon groups which may be unsubstituted or substituted are more preferable; and a monovalent hydrocarbon group which may be substituted and a hydrocarbyloxy group which may be substituted are even more preferable.

In these groups, a nitrogen atom to which a hydrogen atom is bonded is preferably substituted with a monovalent hydrocarbon group. Also, when the group represented by $R^1$ or $R^2$ has more than one substituents, two substituents may be combined to form a ring.

Examples of the monovalent hydrocarbon group represented by the above $R^1$ or $R^2$ include alkyl groups having 1 to 50 carbon atoms (preferably, alkyl groups having 1 to 20 carbon atoms) such as a methyl group, an ethyl group, a propyl group, an isopropyl group, a butyl group, an isobutyl group, a sec-butyl group, a tert-butyl group, a pentyl group, a hexyl group, a nonyl group, a dodecyl group, a pentadecyl group, an octadecyl group and a docosyl group; cyclic saturated hydrocarbon groups having 3 to 50 carbon atoms (preferably, cyclic saturated hydrocarbon groups having 3 to 20 carbon atoms) such as a cyclopropyl group, a cyclobutyl group, a cyclopentyl group, a cyclohexyl group, a cyclononyl group, a cyclododecyl group, a norbornyl group and an adamantyl group; alkenyl groups having 2 to 50 carbon atoms (preferably, alkenyl groups having 2 to 20 carbon atoms) such as an ethenyl group, a propenyl group, a 3-butenyl group, a 2-butenyl group, a 2-pentenyl group, a 2-hexenyl group, a 2-nonenyl group and a 2-dodecenyl group; aryl groups having 6 to 50 carbon atoms (preferably, aryl groups having 6 to 20 carbon atoms) such as a phenyl group, a 1-naphthyl group, a 2-naphthyl group, a 2-methylphenyl group, a 3-methylphenyl group, a 4-methylphenyl group, a 4-ethylphenyl

group, a 4-propylphenyl group, a 4-isopropylphenyl group, a 4-butylphenyl group, a 4-tert-butylphenyl group, a 4-hexylphenyl group, a 4-cyclohexylphenyl group, a 4-adamantylphenyl group and a 4-phenylphenyl group; and aralkyl groups having 7 to 50 carbon atoms (preferably, aralkyl groups having 7 to 20 carbon atoms) such as a phenylmethyl group, a 1-phenylethyl group, a 2-phenylethyl group, a 1-phenyl-1-propyl group, a 1-phenyl-2-propyl group, a 2-phenyl-2-propyl group, a 3-phenyl-1-propyl group, a 4-phenyl-1-butyl group, a 5-phenyl-1-pentyl group and a 6-phenyl-1-hexyl group.

As the monovalent hydrocarbon group represented by $R^1$ or $R^2$, hydrocarbon groups having 1 to 20 carbon atoms are preferable, hydrocarbon groups having 1 to 12 carbon atoms are more preferable, hydrocarbon groups having 2 to 12 carbon atoms are even more preferable, hydrocarbon groups having 1 to 10 carbon atoms are even more preferable, hydrocarbon groups having 3 to 10 carbon atoms are even more preferable, alkyl groups having 1 to 10 carbon atoms are even more preferable and alkyl groups having 3 to 10 carbon atoms are even more preferable.

The hydrocarbyloxy group, hydrocarbylmercapto group, hydrocarbylcarbonyl group, hydrocarbyloxycarbonyl group and hydrocarbylsulfonyl group, respectively, represented by $R^1$ or $R^2$ are groups obtained by bonding one of the aforementioned monovalent hydrocarbon groups to an oxy group, mercapto group, carbonyl group, oxycarbonyl group and sulfonyl group, respectively.

The "amino group substituted with two monovalent hydrocarbon groups which may be unsubstituted or substituted" and "aminocarbonyl group substituted with two monovalent hydrocarbon groups which may be unsubstituted or substituted" represented by $R^1$ or $R^2$ are groups in which two hydrogen atoms in an amino group or aminocarbonyl group (namely, $-C(=O)-NH_2$) are respectively substituted with the aforementioned monovalent hydrocarbon group. Specific examples and preferable examples of the monovalent hydrocarbon group contained therein are the same as monovalent hydrocarbon groups represented by $R^1$.

In the monovalent hydrocarbon group, hydrocarbyloxy group, hydrocarbylmercapto group, hydrocarbylcarbonyl group, hydrocarbyloxycarbonyl group and hydrocarbylsulfonyl group represented by $R^1$, a part or all of the hydrogen atoms contained in these groups may be substituted with, for example, a halogen atom, a hydroxyl group, an amino group, a nitro group, a cyano group, a monovalent hydrocarbon group which may be substituted, a hydrocarbyloxy group which may be substituted, a hydrocarbylmercapto group which may be substituted, a hydrocarbylcarbonyl group which may be substituted, a hydrocarbyloxycarbonyl group which may be substituted or a hydrocarbyksulfonyl group which may be substituted.

$R^1$s and $R^2$s are each particularly preferably a group selected from a hydrogen atom, a methyl group, an ethyl group, a propyl group, an isopropyl group, a n-butyl group, an isobutyl group, a sec-butyl group, a tert-butyl group, a phenyl group, a methylphenyl group, a naphthyl group and a pyridyl group, out of the above-mentioned groups, from the viewpoint of an improvement in the catalytic activity by heating treatment, which will be described later.

In the formulae (I) and (II), $Q^1$ and $Q^2$ are each a bivalent aromatic heterocyclic group which may be substituted. $Q^1$s may be the same or different from each other.

The bivalent aromatic heterocyclic group, which may be substituted, is a bivalent group obtained by removing two hydrogen atoms from an aromatic heterocycle. Examples of the aromatic heterocycle includes bivalent aromatic heterocyclic groups represented by any one of structural formulae (III-1) to (III-15) illustrated below. Particularly preferred are ones represented by any one of structural formulae (III-1) to (III-8). The aromatic heterocycle may be substituted with the above-mentioned substituent of $R^1$ or $R^2$. The heteroatom(s) constituting the aromatic heterocycle may release one or more protons so as to be coordinated to metal atom(s).

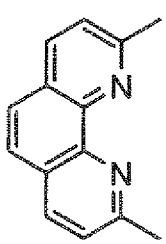
(III-1)

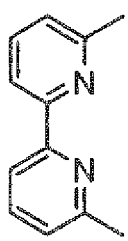
(III-2)

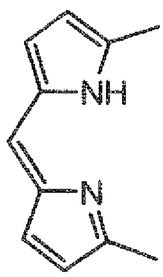
(III-3)

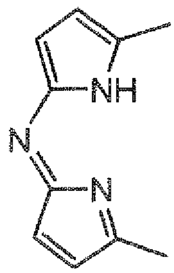
(III-4)

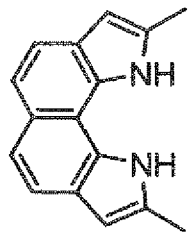
(III-5)

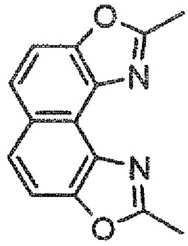
(III-6)

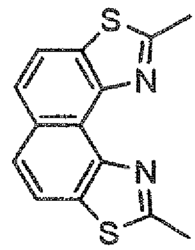
(III-7)

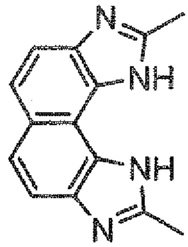
(III-8)

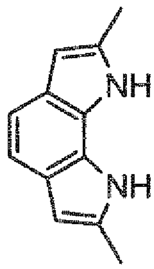
(III-9)

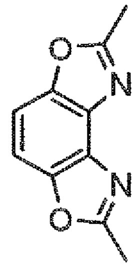
(III-10)

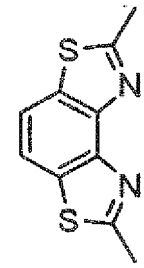
(III-11)

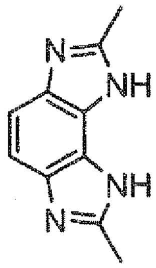
(III-12)

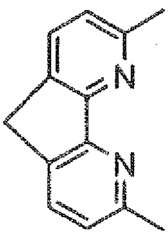
(III-13)

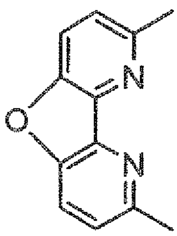
(III-14)

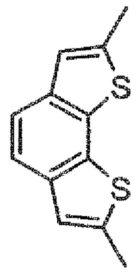
(III-15)

In formula (II), $T^1$ is a monovalent aromatic heterocyclic group which may be substituted. $T^1$s may be the same or different from each other.

The monovalent aromatic heterocyclic group, which may be substituted, is a monovalent group obtained by removing one hydrogen atom from an aromatic heterocycle.

Examples of the aromatic heterocycle include pyridine, pyrimidine, pyrazine, pyridazine, pyrrole, furan, thiophene, thiazole, imidazole, oxazole, triazole, indole, benzoimidazole, benzofuran, benzothiophene, quinoline, isoquinoline, cinnoline, phthalazine, quinazole, quinoxaline, benzodiazine, 1,10-phenanthroline, and naphthyridine. The aromatic heterocycle is preferably pyridine, pyrimidine, pyrazine, pyridazine, or pyrrole. These may be substituted with the substituent(s) of $R^1$ or $R^2$.

The ligand of the base metal complex used in the first embodiment of the present invention is preferably a compound represented by formula (I) or (II). Specific examples thereof are illustrated below (exemplified compounds (IV-1) to (IV-8)). However, the present invention is not limited thereto. In the individual exemplified compounds, $^{t}$Bu represents tert-butyl.

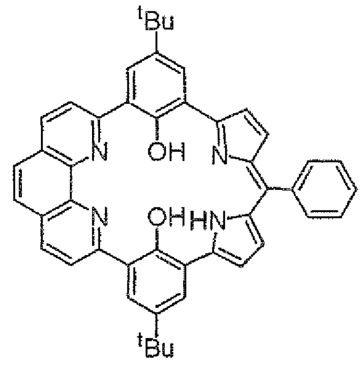

(IV-1)

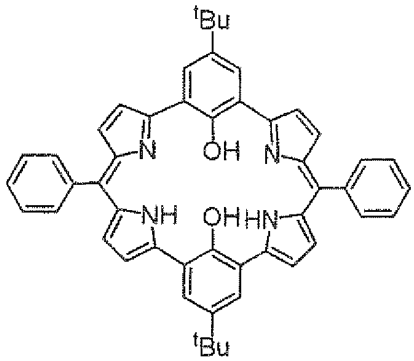

(IV-2)

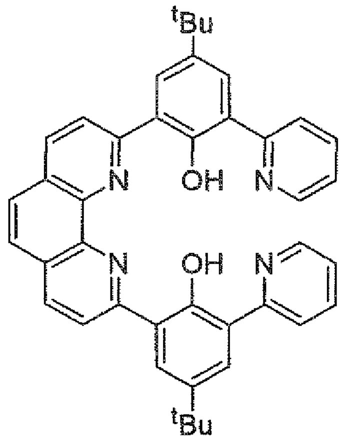

(IV-3)

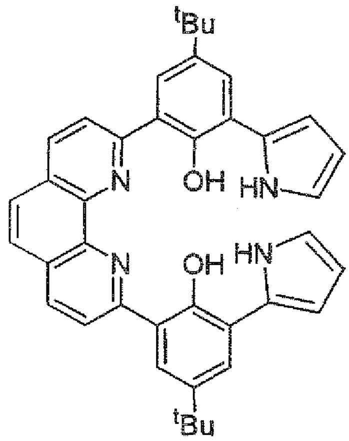

(IV-4)

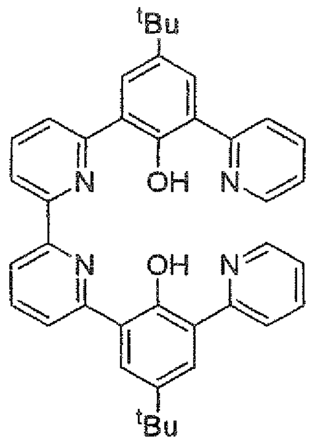

(IV-5)

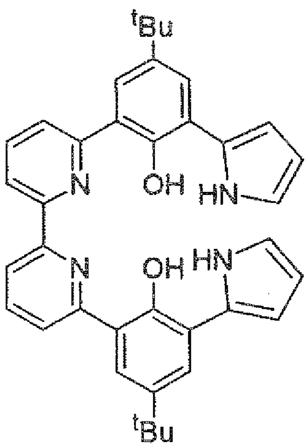

(IV-6)

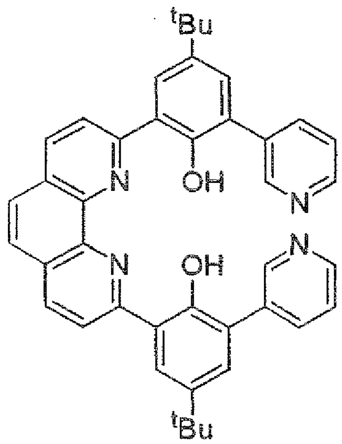

(IV-7)

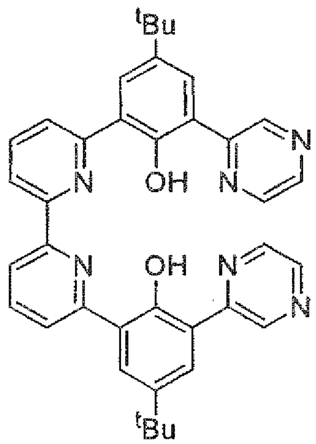

(IV-8)

The compound represented by formula (I) or (II) may be prepared with reference to, for example, the description of "Tetrahedron", Vol. 55, p. 8377 (1999). The compound may be synthesized by synthesizing a precursor having a heterocycle with reference to the description of the literature, and then subjecting the precursor to ring closing reaction with the corresponding aldehyde.

The base metal complex used in the present invention may contain other ligands besides the above ligands.

As such other ligands, compounds which are ionic or electrically neutral may be used. When the base metal complex has more than one these other ligands, these other ligands may be the same or different from each other.

Examples of the electrically neutral compound for the above-described other ligand may includes nitrogen atom-containing compounds such as ammonia, pyridine, pyrrole, pyridazine, pyrimidine, pyrazine, 1,2,4-triazine, pyrazole, imidazole, 1,2,3-triazole, oxazole, isoxazole, 1,3,4-oxadiazole, thiazole, isothiazole, indole, indazole, quinoline, isoquinoline, phenantrizine, cinnoline, phthalazine, quinazoline, quinoxaline, 1,8-naphthylidine, acridine, 2,2'-bipyridine, 4,4'-bipyridine, 1,10-phenanthroline, ethylenediamine, propylenediamine, phenylenediamine, cyclohexanediamine, pyridine-N-oxide, 2,2'-bipyridine-N,N'-dioxide, oxamide, dimethyl glyoxime, and o-aminophenol; oxygen-containing compounds such as water, phenol, oxalic acid, catechol, salicylic acid, phthalic acid, 2,4-pentanedione, 1,1,1-triftuoro-2,4-pentanedione, hexafluoropentanedione, 1,3-diphenyl-1,3-propanedione, and 2,2'-binaphthol; sulfur-containing compounds such as dimethyl sulfoxide and urea; and phosphorus atom-containing compounds such as 1,2-bis(dimethylphosphino)ethane and 1,2-phenylenebis(dimethylphosphine).

Among them, preferable examples are ammonia, pyridine, pyrrole, pyridazine, pyrimidine, pyrazine, 1,2,4-triazine, pyrazole, imidazole, 1,2,3-triazole, oxazole, isoxazole, 1,3,4-oxadiazole, indole, indazole, quinoline, isoquinoline, phenantrizine, cinnoline, phthalazine, quinazoline, quinoxaline, 1,8-naphthylidine, acridine, 2,2'-bipyridine, 4,4'-bipyridine, 1,10-phenanthroline, ethylenediamine, propylenediamine, phenylenediamine, cyclohexanediamine, pyridine-N-oxide, 2,2'-bipyridine-N,N'-dioxide, oxamide, dimethyl glyoxime, o-aminophenol, water, phenol, oxalic acid, catechol, salicylic acid, phthalic acid, 2,4-pentanedione, 1,1,1-trifluoro-2,4-pentanedione, hexafluoropentanedione, 1,3-diphenyl-1,3-propanedione, and 2,2'-binaphthol.

More preferable examples are ammonia, pyridine, pyrrole, pyridazine, pyrimidine, pyrazine, 1,2,4-triazirie, pyrazole, imidazole, 1,2,3-triazole, oxazole, isoxazole, 1,3,4-oxadiazole, indole, indazole, quinoline, isoquinoline, phenantrizine, cinnoline, phthalazine, quinazoline, quinoxaline, 1,8-naphthylidine, acridine, 2,2'-bipyridine, 4,4'-bipyridine, 1,10-phenanthroline, ethylenediamine, propylenediamine, phenylenediamine, cyclohexanediamine, pyridine-N-oxide, 2,2'-bipyridine-N,N'-dioxide, o-aminophenol, phenol, catechol, salicylic acid, phthalic acid, 1,3-diphenyl-1,3-propanedione, and 2,2'-binaphthol.

Among them, further preferable examples among them are pyridine, pyrrole, pyridazine, pyrimidine, pyrazine, pyrazole, imidazole, oxazole, indole, quinoline, isoquinoline, acridine, 2,2'-bipyridine, 4,4'-bipyridine, 1,10-phenanthroline, phenylenediamine, pyridine-N-oxide, 2,2'-bipyridine-N,N'-dioxide, o-aminophenol, and phenol.

Examples of a ligand having anionic property are a hydroxide ion, a peroxide, a superoxide, a cyanide ion, a thiocyanate ion; halide ions, such as a fluoride ion, a chloride ion, a bromide ion, and an iodide ion, a sulfate ion, a nitrate ion, a carbonate ion, a perchlorate ion, a tetrafluoroborate ion; tetraaryl borate ions such as a tetraphenyl borate ion; a hexafluorophosphate ion, a methanesulfonate ion, a trifluoromethanesulfonate ion, a p-toluenesulfonate ion, a benzenesulfonate ion, a phosphate ion, a phosphite ion, an acetate ion, a trifluoroacetate ion, a propionate ion, a benzoate ion, a hydroxide ion, metal oxide ions, a methoxide ion, and an ethoxide ion.

Preferable examples are a hydroxide ion, a sulfate ion, a nitrate ion, a carbonate ion, a perchlorate ion, a tetrafluoroborate ion, a tetraphenyl borate ion, a hexafluorophosphate ion, a methanesulfonate ion, a trifluoromethanesulfonate ion, a p-toluenesulfonate ion, a benzenesulfonate ion, a phosphate ion, an acetate ion, and a trifluoroacetate ion; and particularly preferable examples among them are a hydroxide ion, a sulfate ion, a nitrate ion, a carbonate ion, a tetraphenyl borate ion, a trifluoromethanesulfonate ion, a p-toluenesulfonate ion, an acetate ion, and a trifluoroacetate ion.

Further, ions exemplified above as a ligand having an anionic property may be a counter ion electrically neutralizing the base metal complex itself used in the present invention.

Further, the base metal complex used in the first embodiment of the present invention may have a counter ion having a cationic property to keep the electric neutrality.

Examples of the counter ion having the cationic property include alkali metal ions, alkaline earth metal ions; tetraalkylammonium ions such as a tetra(n-butyl)ammonium ion and a tetraethylammonium ion; and tetraarylphosphonium ions such as a tetraphenylphosphonium ion.

Specific examples thereof include a lithium ion, a sodium ion, a potassium ion, a rubidium ion, a cesium ion, a magnesium ion, a calcium ion, a strontium ion, a barium ion, a tetra(n-butyl)ammonium ion, a tetraethylammonium ion, and a tetraphenylphosphonium ion; and more preferable examples include a tetra(n-butyl)ammonium ion, a tetraethylammonium ion, and a tetraphenylphosphonium ion.

Particularly preferable among them are, as a counter ion having a cationic property, a tetra(n-butyl)ammonium ion and a tetraethylammonium ion.

The preparation of the base metal complex used in the present invention may be conducted described below.

Next, the method of synthesizing base metal complex used in the present invention will be described. The base metal complex can be obtained by mixing the ligand and a reaction agent that provides the metal atom (hereinafter referred to as "metal-providing agent"). As the metal-providing agent, an acetate, chloride, sulfate or carbonate of the exemplified base metals may be used.

As described in a non-patent literature "Tetrahedron., 1999, 55, 8377.", the ligand can be synthesized by: performing an addition reaction of an organometallic reaction agent to a heterocyclic compound; oxidizing the resultant; subjecting the resultant to a halogenation reaction; and subjecting the resultant to a cross-coupling reaction with a transition metal catalyst. Alternatively, the ligand can be synthesized by performing a multistage cross-coupling reaction using a halogenated heterocyclic compound.

As described above, the base metal complex used in the present invention can be obtained by mixing the ligand and the metal-providing agent in the presence of a proper reaction solvent. Specific examples of the reaction solvent include water, acetic acid, oxalic acid, ammonia water, methanol, ethanol, n-propanol, isopropyl alcohol, 2-methoxyethanol, 1-butanol, 1,1-dimethylethanol, ethylene glycol, diethyl ether, 1,2-dimethoxyethane, methylethyl ether, 1,4-dioxane, tetrahydrofuran, benzene, toluene, xylene, mesitylene, durene, decalin, dichloromethane, chloroform, carbon tetrachloride, chlorobenzene, 1,2-dichlorobenzene, N,N'-dimethylformamide, N,N'-dimethyl acetamide, N-methyl-2-pyrrolidone, dimethylsulfoxide, acetone, acetonitrile, benzonitrile, triethylamine, and pyridine. A reaction solvent obtained by mixing two of them may be used and a solvent which can dissolve the ligand and the metal-providing agent is preferred. The reaction can be performed at a temperature of generally -10 to 200°C, preferably 0 to 150°C, or Particularly preferably 0 to 100°C for a time period of generally 1 minute to 1 week, preferably 5 minutes to 24 hours, or particularly preferably 1 hour to 12 hours. It should be noted that the reaction temperature and the reaction time can also be appropriately optimized depending on the ligand and the metal-providing agent.

An optimum method selected from a known recrystallization method, a known reprecipitation method, and a known chromatography method can be appropriately employed as a method involving isolating the produced base metal complex from the reaction solution after the reaction and purifying the base metal complex, and two or more of these methods may be employed in combination. It should be noted that the produced base metal complex may deposit depending on the reaction solvent; the deposited base metal complex can be isolated and purified by separating the base metal complex by filtration or the like and subjecting the separated product to a washing operation and a drying operation as required.

Examples of the base metal complex used in the present invention include base metal complexes represented by any one of formulae (V-1) to (V-8) illustrated below. $M^1$ and $M^2$ in each of the formulae each represent a base metal atom. Specific examples thereof include the above-mentioned base metal atoms. $M^1$ and $M^2$ may be the same or different from each other. In the following formulae, Me represents methyl and $^tBu$ represents tert-butyl, In the formulae, any electric charge of the complex is omitted.

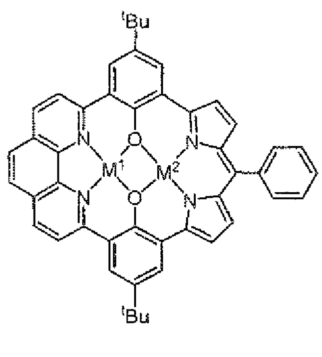

(V-1)

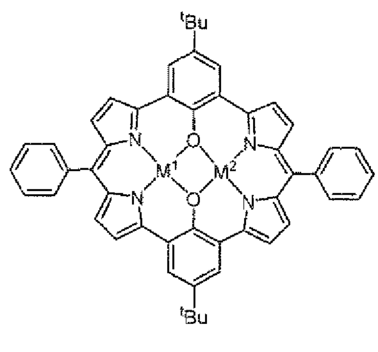

(V-2)

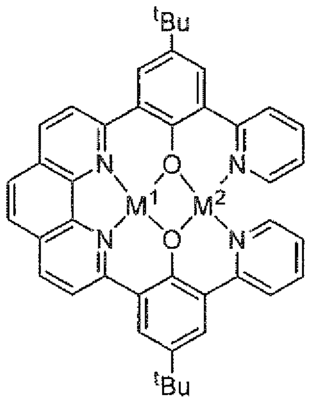

(V-3)

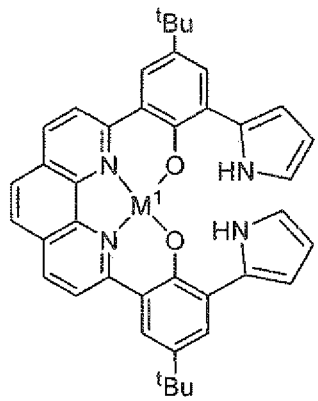

(V-4)

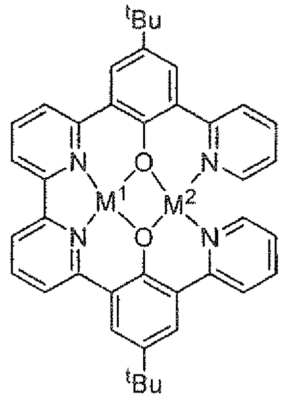

(V-5)

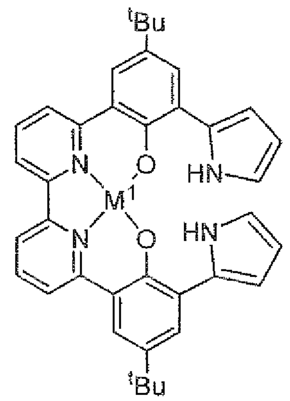

(V-6)

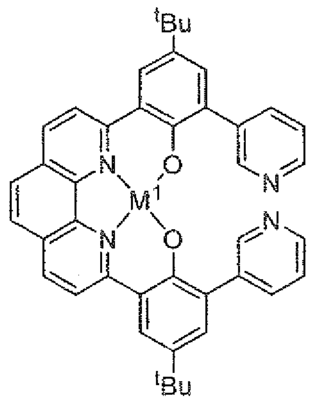

(V-7)

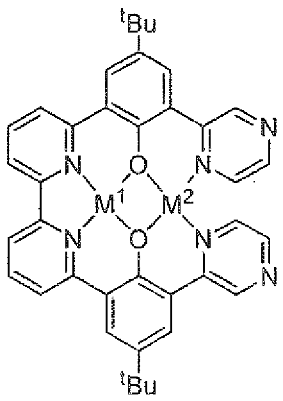

(V-8)

The base metal complex used in the first embodiment of the present invention may be used, as the electrode catalyst as it is, or may be used as the electrode catalyst in the state that the complex is dispersed in an electroconductive carrier such as carbon.

In the membrane-electrode assembly of the first embodiment of the present invention, a polymer on which the base metal complex is carried may be used as the electrode catalyst. Examples of the form of the polymer include a polymer having a residue of the base metal complex, and a polymer having a residue of the base metal complex as a repeating unit. The polymer having a residue of the base metal complex means a polymer having a group of atoms obtained by removing a part or all (usually, one hydrogen atom) of hydrogen atoms in the base metal complex. The polymer used in this case is not particularly limited, and examples thereof include electroconductive polymers, dendrimers, natural polymers, solid polymer electrolytes, polyethylene, polyethylene glycol, and polypropylene. Among these, electroconductive polymers and solid polymer electrolytes are particularly preferred. The word of electroconductive polymer is a generic name of polymeric materials exhibiting a metallic or semi-metallic electroconductivity (Iwanami, Dictionary of Physics and Chemistry, 5th edition, published in 1988)). Examples of the electroconductive polymers include polyacetylene and derivatives thereof, poly-p-phenylene and derivatives thereof, poly-p-phenylenevinylene and derivatives thereof, polyaniline and derivatives thereof, polythiophene and derivatives thereof, polypyrrole and derivatives thereof, polyfluorene and derivatives thereof, polyfluorene and derivatives thereof, polycarbazole and derivatives thereof, polyindole and derivatives thereof, and copolymers of these electroconductive polymers, as described in "Electroconductive Polymers" (written by Shinichi Yoshimura, Kyoritsu Shuppan Co., Ltd.) and "Latest Applied Technique of Electroconductive Polyerms" (supervised by Masao Kobayashi, CMC Publishing Co., Ltd.).
Examples of the solid polymer electrolytes includes polymers each obtained by sulfonating perfluorosulfonic acid, polyetheretherketone, polyimide, polyphenylene, polyarylerte, or polyaryleneethersulfone.

The polymer having a residue of the base metal complex as a repeating unit means a polymer having, as a

repeating unit, a group of atoms obtained by removing a part or all (usually, two hydrogen atoms) of hydrogen atoms in the base meta! complex.

It is allowable that the base metal complex used in the first embodiment of the present invention is subjected to heating treatment and then the treated complex is used as the electrode catalyst. It is preferred to conduct the heating treatment since the treatment produces an advantageous effect of improving the catalytic activity and the stability.

The base metal complex to be used for the heating treatment may be one base metal complex or two or more base metal complexes.

As pretreatment for the heating treatment, the base metal complex is particularly preferably dried at a temperature of 15°C or higher and 200°C or lower under a reduced pressure of 10 Torr (1333.33 Pa) or lower for 6 hours or longer. The pretreatment may be carried out using a vacuum drier or the like.

The atmosphere used in the heat-treatment of the base metal complex is preferably a reducing atmosphere such as hydrogen or carbon monoxide; an oxidizing atmosphere such as oxygen, carbon dioxide gas or steam; an inert gas atmosphere such as nitrogen, helium, neon, argon, krypton or xenon; or an atmosphere in the presence of gas or vapor of a nitrogen-containing compound such as ammonia and acetonitrile or of a mixture of these gases.

More preferably the reducing atmosphere is a hydrogen atmosphere or a mixture gas atmosphere containing hydrogen and the above inert gas, the oxidizing atmosphere is an oxygen atmosphere or a mixture gas atmosphere containing oxygen and the above inert gas and the inert gas atmosphere is a nitrogen, neon or argon atmosphere or a mixture gas atmosphere containing these inert gases.

The pressure for the heating treatment is not particularly limited, but it is preferably an about normal pressure of 0.5 to 1.5 atm.

The temperature for the heating treatment of the base metal complex is preferably 250°C or higher, more preferably 300°C or higher, furthermore preferably 400°C or higher, and even more preferably 500°C or higher. In addition, the temperature at the time of the heating treatment is preferably 1,500°C or lower, more preferably 1,200°C or lower, and particularly preferably 1,000°C or lower.

The treatment time for the heating treatment may be set properly depending on the above-mentioned gas to be used, temperature, and the like and in the state that the above-mentioned gas is tightly closed or ventilated, the temperature is gradually increased from room temperature to an aimed temperature and thereafter, it may be decreased immediately. Particularly, it is preferable to keep the temperature after the temperature reaches the aimed temperature since the base metal complex can be gradually modified and the durability can be improved more. The retention time after the temperature reaches the aimed temperature is preferably 1 to 100 hours, more preferably 1 to 40 hours, furthermore preferably 2 to 10 hours, and particularly preferably 2 to 3 hours.

An apparatus for the heating treatment is not particularly limited and a tubular furnace, an oven, a furnace, an IH hot plate, and the like can be exemplified.

As the electrode catalyst of the membrane-electrode assembly of the first embodiment of the present invention, a base metal complex mixture containing (a) base metal complex and (b) carbon carrier described above may be used as an electrode catalyst for a fuel battery.

In the base metal complex mixture, the ratio of (a) and (b) to be mixed is preferably designed such that the content of (a) is 1 to 70 mass% based on the total mass of (a) and (b). The content of the (a) base metal complex is preferably 2 to 60 mass% and more preferably 3 to 50 mass%.

Examples of the carbon carrier include carbon particles such as Norit (trade name: manufactured by NORIT Corporate), Ketjen black (trade name: manufactured by Lion Corporation), Vulcan (trade name: manufactured by Cabot Corporation), black pearl (trade name: manufactured by Cabot Corporation), acetylene black (trade name: manufactured by Chevron Corporation); fullerene such as C60 and C70; carbon nanotubes, carbon nanohorns, carbon fibers and the like.

About such a base metal complex mixture, in the same manner as about the above-mentioned base metal complex, it is allowable that the mixture is subjected to heating treatment and then the treated mixture is used as the electrode catalyst. Conditions and others for subjecting the base metal complex mixture to the heating treatment are the same as the conditions for subjecting the base metal complex to heating treatment.

(Electrolyte membrane)

It is preferred to use, as the electrolyte membrane of the membrane-electrode assembly of the first embodiment of the present invention, a proton-conductive electrolyte membrane such as a perfluoro-based polymeric electrolyte membrane, a hydrocarbon-based polymeric electrolyte membrane, or a proton-conductive inorganic membrane. More preferred are a perfluoro-based polymeric electrolyte membrane, and a hydrocarbon-based polymeric electrolyte membrane, and in particular preferred is a perfluoro-based polymeric electrolyte membrane.

As the electrolyte membrane, for example, the following may be used in the membrane-electrode assembly of the present invention: Nafion 112, Nafion 115 or Nafion 117 (trade name, manufactured by DuPont), Flemion (trade name, manufactured by Asahi Glass Co., Ltd.) or Aciplex (trade name, manufactured by Asahi Chemical Co., Ltd.).

It is preferred to use, as the electrolyte membrane, an electrolyte membrane small in film thickness since the resistance of the fuel battery can be decreased. The film thickness is preferably 200 μm or less, more preferably 150 μm or less, even more preferably 100 μm or less, in particular preferably 50 μm or less. If the film thickness of the electrolyte membrane is too small, cross leakage of gases is easily caused. Thus, the film thickness is preferably 1 μm or more, more preferably 3 μm or more, in particular preferably 5 μm or more.

(Tafel's equation)

The Tafel plot used in the present invention will be described. The Tafel plot is a plot of the logarithm of current density relative to overvoltage as described in, for example, "Electrochemistry Grasped from Principle" (first edition, 2006, Shokabo Publishing Co., Ltd.).

When the overvoltage, the exchange current density, the current density of an anodic reaction and the current density of a cathodic reaction are represented by $\eta$, $i_0$, $i_a$ and $i_c$, respectively, Tafel's equations of the anodic reaction and the cathodic reaction are each described below.

<Anodic reaction>

Equation 1 $$\eta = -b_a \log(i_0/Acm^{-2}) + b_a \log(i_a/Acm^{-2})$$

<Cathodic reaction>

Equation 2 $$\eta = b_c \log(i_0/Acm^{-2}) - b_c \log(|i_c|/Acm^{-2})$$

In the equations 1 and 2, $b_a$ and $b_c$ are Tafel slopes of the anodic reaction and the cathodic reaction, respectively, and they are represented by $b_a = 2.3\ RT/\alpha_a zF$ and $b_c = 2.3\ RT/\alpha_c ZF$, respectively, wherein $\alpha_a$ and $\alpha_c$ are the transfer coefficient of the anodic reaction and that of the cathodic reaction, respectively, and R, T, z and F are the gas constant, the temperature (Kelvin), the number of transferred electrons, and the Faraday constant, respectively.

The exchange current density $i_0$ obtained from the Tafel plot is in proportion to the reaction rate constants on the electrodes. As this value is larger, the reactions on the electrodes advance more rapidly.

Accordingly, the value of the exchange current density $i_0$ is preferably $5.0 \times 10^{-4}$ $Acm^{-2}$ or more, more preferably $8.0 \times 10^{-4}$ $Acm^{-2}$ or more, even more preferably $1.0 \times 10^{-3}$ $Acm^{-2}$ or more, in particular preferably $1.1 \times 10^{-3}$ $Acm^{-2}$ or more. The maximum value of the exchange current density $i_0$ obtained usually in conventional platinum catalysts is $1.0 \times 10^{-2}$ $Acm^{-2}$.

The Tafel slope is a value determined based on the transfer coefficient of a reaction, and the number of transferred electrons, and is largely varied in accordance with the reversibility of the reaction and the number of electrons related to the reaction. In the case of the cathodic reaction (oxygen-reduction reaction), the theoretical value thereof is 69 mV/decade; however, the value is made large by the transfer of protons and generated water on the electrodes, a generation of hydrogen peroxide and the like, so that the power generation property tends to be declined.

The Tafel slope of the cathodic reaction is preferably 450 mV/decade or less, more preferably 400 mV/decade or less, in particular preferably 350 mV/decade or less.

The minimum value of the Tafel slope obtained usually in conventional platinum catalysts is 69 mV/decade.

In a case where in a membrane-electrode assembly having an electrode catalyst containing a base metal complex, the exchange current density $i_0$ is $5.0 \times 10^{-4}$ $Acm^{-2}$ or more and further the Tafel slope is 450 mV/decade or less as in the present invention, in particular, in the first embodiment of the present invention, the power generation property of the fuel battery cell is improved.

(About Membrane-Electrode Assembly of Second Embodiment)

[Membrane-electrode assembly]

A membrane-electrode assembly (hereinafter also referred to as an "MEA") of the second embodiment of the present invention has, on both sides of an electrolyte membrane, catalyst layers each containing an electrode catalyst, respectively, wherein at least one of the catalyst layers contains a non-noble metal-based electrode catalyst, and the electrolyte membrane is a hydrocarbon-based electrolyte membrane.

(Electrode catalyst)

The non-noble metal-based electrode catalyst in the membrane-electrode assembly of the second embodiment of the present invention is an electrode catalyst which does not contain a non-noble metal element as a catalytic component. The noble metal element denotes gold, silver, ruthenium, rhodium, palladium, osmium, iridium or platinum as described in Dictionary of Physics and Chemistry (5th edition, 3rd impression, 1998, Iwanami Shoten, Publishers). Accordingly, the non-noble metal-based electrode catalyst in the present invention is made of one or more elements other than the above-mentioned noble metal elements, that is, one or more transition elements and/or one or more typical elements.

The electrode catalyst of the cathode (oxygen electrode or air electrode), the electrode catalysts used in the second embodiment of the present invention, is a material having a catalytic effect onto the following oxygen reducing reaction:

$$O_2 + 4H^+ + 4e^- \rightarrow 2H_2O$$

Examples of the material, which has a catalytic effect on the oxygen reducing reaction, include metal complexes and thermally treated metal complexes described in JP-A-2006-59578, P. A. Vigato, S. Tamburini, "Coordination Chemistry Reviews", Vol. 248, pp. 1717-2128 (2004), Tatsuhiro Okada et al., "Journal of Inorganic and Organometallic Polymer", Vol. 9, No. 4, pp. 199-219 (1009) and the like; thermally treated products of metal-ion-carried polymers described in JP-T-2006-504232 ("JP-T" means published searched patent publication) and the like; mental oxynitrides described in JP-A-2005-161203 and the like; metal oxides described in JP-A-2004-95263, JP-A-2005-50759, and the like; carbon materials made mainly of slightly graphitizing carbon described in JP-A-2003-249231 and the like; nitrogen-containing activated carbides described in JP-A-2004-330181 and the live; and nitrogen-atom- and/or boron-atom-doped carbon alloy fine particles described in JP-A-2004-362802 and the like.

About the electrode catalyst of the cathode, the catalyst may be used alone, or the catalyst may be used as a composite materials wherein material are combined with each other. The use form thereof is not Particularly limited as far as the function thereof is not lost. It is preferred that the catalyst is used by being carried on a carbon carrier such as carbon black or carbon nanotubes, an metal oxide having acid resistance, such as titanium oxide, a polymer having electroconductivity, or the like.

It is preferred to use, as the electrode catalyst of the cathode, a material high in oxygen reducing activity. Such a material includes, for example, a metal complex, a thermally treated metal complex, a thermally treated product of a metal-ion-carried polymer, a metal oxynitride, or a metal oxide. More preferred are a metal complex, a thermally treated product of mental complex, and a thermally treated product of a metal-ion-carried polymers, and particularly preferred are a metal complex and a thermally treated product of metal complex.

As the metal complex, the following may be used: Werner complexes described on page 142 of "Dictionary of Chemistry" edited by Michinori Ohki et al., (1st edition, 1994, Tokyo Kagaku Dozin Co., Ltd.), non-Werner complexes described on page 1117 thereof; metal complexes described on pages from 103 to 112 of "Fuel Cell and Polymer" edited by The Society of Polymer Science, Japan, Research Group on Materials for Polymer Electrolyte Fuel Cell (Kyoritsu Shuppan Co., Ltd., published in November 10, 2005, Kyoritsu Shuppan Co., Ltd.); and the like. It is particularly preferred to use a metal complex having, as a ligand, an organic compound having an aromatic ring structure, such as pyridine, phenanthroline, pyrrole or phenol since the catalytic activity is improved. Examples of the metal complex include metal complexes represented by the formulae (X-1) to (X-15) illustrated below. More preferred are metal complexes represented by the formulae (X-1) to (X-12), and particularly preferred are metal complexes represented by the formulae (X-1) to (X-7). Hydrogen atoms in the ligand of the metal complex in each of the formulae may each be substituted with an alkyl group such as a methyl group, an ethyl group or a butyl group, a halogeno-group such as a chloro-group or a bromo-group, an aromatic group such as a phenol group or a pyridyl group. $M^1$ and $M^2$ in each of the formulae each represent a metal atom belonging to non-noble metal elements. $M^1$ and $M^2$ may be the same or different from each other. In the formulae, any electric charge of the complex is omitted.

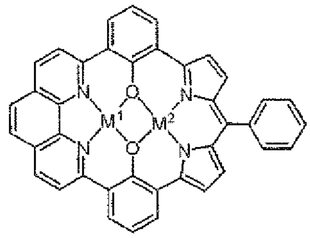
(X-1)

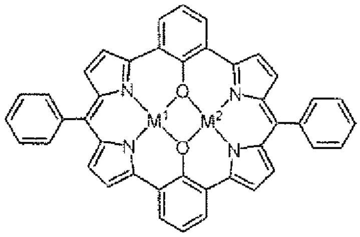
(X-2)

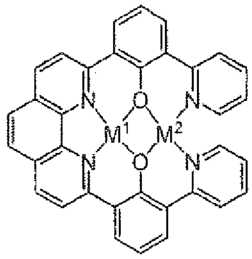
(X-3)

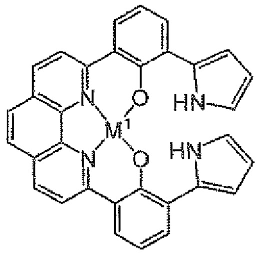
(X-4)

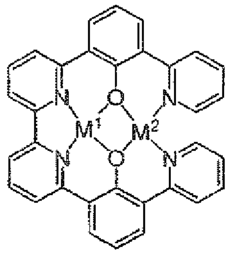
(X-5)

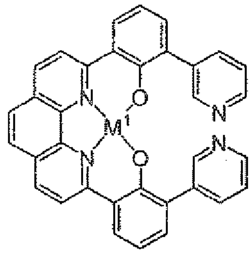
(X-6)

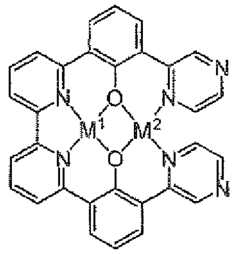
(X-7)

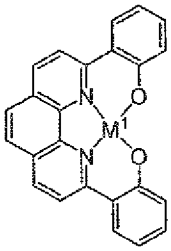
(X-8)

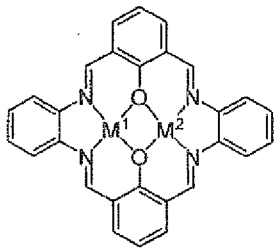
(X-9)

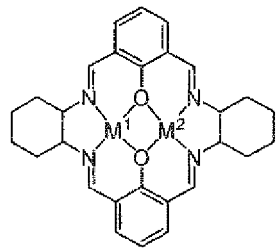
(X-10)

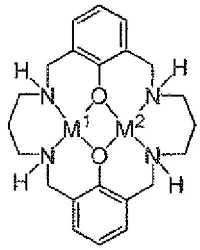
(X-11)

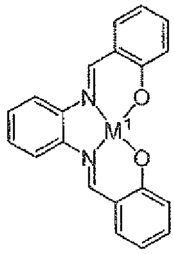
(X-12)

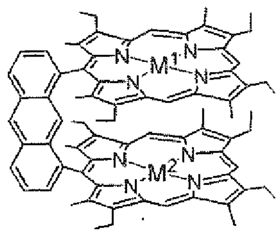
(X-13)

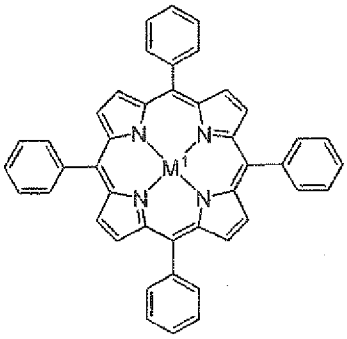
(X-14)

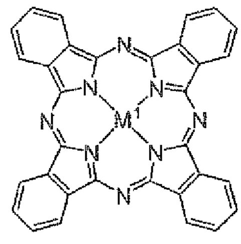
(X-15)

The thermally treated product of metal complex is a metal complex obtained by treating the above-mentioned metal complex thermally under an atmosphere of an inert gas such as nitrogen. The temperature when the thermal treatment is conducted is preferably 250°C or higher, more preferably 300°C or higher, even more preferably 400°C or higher, in particular preferably 500°C or higher. The upper limit of the temperature required for the thermal treatment is preferable 1500°C or lower, more preferably 1200°C or lower, in particular preferably 1000°C or lower. The apparatus for conducting the thermal treatment is not particularly limited, and may be a tubular furnace, an oven, a furnace, an IH

hot plate or the like.

Examples of the metal element contained in the electrode catalyst of the cathode include scandium, titanium, vanadium, chromium, manganese, iron, cobalt, nickel, copper, zinc, gallium, yttrium, zirconium, niobium, molybdenum, cadmium, indium, tin, antimony, tellurium, lantern, cerium, praseodymium, neodymium, samarium, europium, gadolinium, terbium, dysprosium, holmium, erbium, thulium, ytterbium, lutetium, hafnium, tantalum, tungsten, and rhenium.

Among these, scandium, titanium, vanadium, chromium, manganese, iron, cobalt, nickel, copper, zinc, gallium, yttrium, zirconium, niobium, molybdenum, lanthanum, cerium, praseodymium, neodymium, samarium, hafnium, tantalum, and tungsten are more preferable; and vanadium, chromium, manganese, iron, cobalt, nickel, copper, zirconium, niobium, molybdenum, tantalum, and tungsten are further preferable.

Among these atoms, more particularly preferable examples are elements selected from a group consisting of vanadium, chromium, manganese, iron, cobalt, nickel, and copper.

The electrode catalyst of the anode (fuel electrode), the electrode catalysts used in the second embodiment of the present invention, is a material having a catalytic effect onto an oxidizing reaction as shown below.

(In the case of using hydrogen as a fuel)

$$H_2 \rightarrow 2H^+ + 2e^-$$

(In the case of using methanol as a fuel)

$$CH_3OH + H_2O \rightarrow CO_2 + 6H^+ + 6e^-$$

The fuel for the anode is not limited to hydrogen or methanol, which is given above as the example; besides, the following may be used: alcohols having 2 to 10 carbon atoms such as ethanol and propanol, ethers having 2 to 10 carbon atoms such as dimethyl ether and diethyl ether, formic acid, aldehydes having 1 to 5 carbon atoms such as formaldehyde, hydrocarbons having 1 to 20 carbon atoms such as methane, ethane and kerosene, and nitrogen-containing compounds such as ammonia, hydrazine and ammonia borane.

It is preferred that when hydrogen, alcohol or ether is used among the fuels given above as the examples, a material having a high catalytic activity onto an oxidizing reaction of the used fuel is used as the electrode catalyst of the anode. Examples of such a material include metal complexes and thermally treated product of metal complexes described in JP-A-2006-59578, P. A. Vigato, S. Tamburini, "Coordination Chemistry Reviews", Vol. 248, pp. 1717-2128 (2004), Tatsuhiro Okada et al., "Journal of Inorganic and Organometallic Polymers", Vol. 9, No. 4, pp. 199-219 (1999) and the like; polymer-coordinated metal complexes described in JP-A-2004-31174 and the like; hydrated titanium oxide on which a metal complex is carried, described in JP-A-60-31827 and the like; thermally treated products of metal-ion-carried polymers, described in JP-T-2006-504232 and the like; molybdenum carbide described in "Electrochemical and Solid-State Letters", Vol. 9, No. 3, pp. A160-A162 (2006) and the like; tungsten oxide described in JP-A-2006-12773 and the like; metal oxides described in JP-A-2005-50760 and the like; titanium borate described in JP-A-2006-120407 and the like; transition metal silicates descried in JP-A-2005-310418 and the like; and heteropolyacids described in JP-A-2004-241307 and the like.

About the electrode catalyst of the anode, the catalyst may be used alone, or the catalyst may be used as a composite material wherein materials are combined with each other. The use form thereof is not particularly limited as far as the function thereof is not lost. It is preferred that the catalyst is used by being carried on a carbon carrier such as carbon black or carbon nanotubes, an metal oxide having acid resistance, such as titanium oxide, a polymer having electroconductivity, or the like. Examples of the mental element contained in the electrode catalyst of the anode are equivalent to the elements described and given as examples of the mental element contained in the electrode catalyst of the cathode.

The materials given as the examples of the electrode catalyst of the cathode and the electrode catalyst of the anode are not limited to catalysts for the cathode and catalysts for the anode, respectively. It is preferred that the materials are each used in a moiety where the function thereof can be effectively exhibited. It is also preferred that both of the electrode catalyst of the cathode and the electrode catalyst of the anode are non-noble metal-based electrode catalysts; however, a part thereof may contain a noble metal electrode catalyst such as platinum as far as the subject matter of the present invention is not lost. It is more preferred to use the non-noble metal-based electrode catalyst at least in either of the cathode side or the anode side. When the amount of platinum in the catalyst layer(s) is large, costs for the

production of the fuel battery is high; thus, it is preferred that the platinum amount in the catalyst layer(s) is smaller. In the case of defining the relationship P between the total mass of the non-noble metal-based electrode catalyst in the catalyst layer(s) and the total mass of the non-noble metal-based electrode catalyst and platinum in the catalyst layer (s) as shown by the following Equation (1), the value of P is preferably 0.8 or less, more preferably 0.7 or less, even more preferably 0.6 or less, in particular preferably 0.5 or less. The lower limit of P is 0.

P = (total mass of platinum in the catalyst layer(s))/(total mass of the non-noble metal-based electrode catalyst and platinum in the catalyst layer(s))

Equation (1)

(Electrolyte membrane)

In the second embodiment of the present invention, as a hydrocarbon-based electrolyte membrane, a hydrocarbon-based electrolyte membrane having proton conductivity is preferably used. This is usually made of a hydrocarbon-based polymer electrolyte. The "hydrocarbon-based polymer electrolyte" herein means a polymer electrolyte wherein the content by percentage of halogen atoms such as fluorine atoms is 25% or less by mass (preferably from 0 to 5% by mass) in the element-mass-composition-ratio. About the hydrocarbon-based polymer electrolyte, any one of a polymer electrolyte having an acidic group and a polymer electrolyte having a basic group may be used. Since a fuel battery more excellent in power generation performance is used, a polymer electrolyte having an acidic group is more preferred. Examples of the acidic group include a sulfonic acid group, a carboxylic acid group, a phosphonic acid group, a phosphinic acid group, a sulfonylimide group ($-SO_2NHSO_2-$), a phenolic hydroxyl group, and the like. More preferred is a sulfonic acid group or a phosphonic acid group, and particularly preferred is a sulfonic acid group.

Typical examples of the hydrocarbon-based polymer electrolyte include, for example, (A) a polymers electrolyte wherein a sulfonic acid group and/or a phosphonic acid group is/are introduced into a hydrocarbon-based polymer having a main chain made of an aliphatic hydrocarbon; (B) a polymer electrolyte wherein a sulfonic acid group and/or a phosphonic acid group is/are introduced into a polymer having a main chain having an aromatic ring; (C) a polymer electrolyte wherein a sulfonic acid group and/or a phosphonic acid group is/are introduced into a polymer having a main chain made of an aliphatic hydrocarbon and an inorganic unit structure such as a siloxane group or phosphazene group; (D) a polymer electrolyte wherein a sulfonic acid group and/or a phosphonic acid group is/are introduced into a copolymers composed of any two or more selected from repeating units constituting the polymers before the introduction of the sulfonic acid group and/or the phosphonic acid group in (A) to (C); and (E) a polymer electrolyte wherein an acidic compound such as sulfuric acid or phosphoric acid is introduced, by ionic bond, into a hydrocarbon-based polymer having, in its main chain or its side chain, a nitrogen atom.

As the polymer electrolyte mentioned in (A), for example, there are listed polyvinyl sulfonic acid, polystyrene sulfonic acid and poly($\alpha$-methylstyrene) sulfonic acid.

As the polymer electrolyte mentioned in (B), its main chain may be interrupted by a hetero atom such as an oxygen atom, for example, there are listed those that a sulfonic acid group is introduced into each of the homopolymers such as polyetheretherketone, polysulfone, polyethersulfone, poly(arylene ether), polyimide, poly((4-phenoxybenzoyl)-1,4-phenylene), polyphenylene sulfide, and polyphenylquinoxalene; and sulfoarylated polybenzimidazole, sulfoalkylated polybenzimidazole, phosphoalkylated polybenzimidazole described in, for example, JP-A-9-110982, and phosphonated poly(phenylene ether) described in, for example, J. Appl. Polym. Sci., 18, 1969 (1974).

As the polymer electrolyte mentioned in (C), for example, there are listed one that a sulfonic acid group is introduced into polyphosphazene described in Polymer Prep., 41, No. 1, 70 (2000). This can be easily produced referring to the production method of a polysiloxane having a phosphonic acid group.

The polymer electrolyte mentioned in (D) may be an electrolyte wherein a sulfonic acid group and/or a phosphonic acid group is/are introduced into a random copolymer, an electrolyte wherein a sulfonic acid group and/or a phosphonic acid group is/are introduced into a copolymer in which repeating units bond to each other alternatively, or an electrolyte wherein a sulfonic acid group and/or a phosphonic acid group is/are introduced into a block copolymer. Examples of the electrolyte wherein a sulfonic acid group is introduced into a random copolymer include sulfonated polyethersulfone polymers described in JP-A-11-116679.

As the polymer electrolyte mentioned in (E), for example, listed is polybenzimidazole or the like containing phosphoric acid described in JP-T-11-503262.

Among the polymers electrolytes, the polymer electrolyte mentioned in (B) or (D) is preferred from the standpoint of making a high power generation performance and endurance consistent with each other.

Among them, from the viewpoint of heat resistance and easiness of recycle, it is preferred that the above-mentioned hydrocarbon-based electrolyte membrane contains an aromatic polymer electrolyte. The aromatic-based polymer electrolyte may be a polymeric compound having, in the main chain of its polymeric chain, an aromatic ring and having, in its side chain and/or the main chain, acidic group(s). As the aromatic-based polymer electrolyte, an electrolyte soluble in a solvent is usually used. About this electrolyte, an electrolyte membrane having a desired film thickness can easily be obtained by a known solution casting method.

The acidic group of the aromatic-based polymer electrolyte may be substituted directly on the aromatic ring constituting the main chain of the polymer, may be bonded to the aromatic ring constituting the main chain through a linking group, or may be a combination of these forms.

The "polymer having an aromatic ring in its main chain" refers to, for example, a polymer wherein bivalent aromatic groups are linked with each other, as the main chain like a polyarylene; or a polymer wherein bivalent aromatic groups are linked with each other through bivalent groups to constitute the main chain. Examples of the bivalent groups include -O-, -S-, carbonyl groups, sulfinyl groups, sulfonyl groups, amide groups, ester groups, carbonic acid ester groups, alkylene groups having about 1 to 4 carbon atoms, fluorine-substituted alkylene groups having about 1 to 4 carbon atoms, alkenylene groups having about 2 to 4 carbon atoms, and alkynylene groups having about 2 to 4 carbon atoms. Examples of the aromatic group include aromatic groups such as a phenylene group, a naphthalene group, an anthracenylene group and a fluorenediyl group; and aromatic heterocyclic groups such as a pyridinediyl group, a furandiyl group, a thiophenediyl group, an imidazolyl group, an indolediyl group and a quinoxalinediyl group.

The bivalent aromatic groups may each have a substituent other than the above-mentioned acidic group. Examples of the substituent include alkyl groups having 1 to 20 carbon atoms, alkoxy groups having 1 to 20 carbon atoms, aryl groups having 6 to 20 carbon atoms, aryloxy groups having 6 to 20 carbon atoms, a nitro group, and halogen atoms. When the bivalent aromatic groups each have a halogen atom as the substituent, or when the aromatic-based polymer electrolyte has fluorine-substituted alkylene groups as the bivalent groups for linking the aromatic groups, the halogen atom amount is set to 25% or less (preferably 0 to 5% by mass) when the amount is represented as an element-mass-composition-ratio of the aromatic-based polymer electrolyte.

The aromatic-based polymer electrolyte is preferably an electrolyte that may give a membrane having both of domains which have an acidic group contributing to proton conductivity and domains which do not substantially have any ion exchange group contributing to mechanical strength at the time when the aromatic polymer electrolyte is made into a membranous form, that is, a membrane wherein phase separation, preferably micro phase separation, is generated at the time. The structure of the micro phase separation referred to herein denotes, for example, a structure wherein fine phases (microdomains) high in the density of blocks (A) which have an acidic group and fine phases (microdomains) high in the density of blocks (B) which do not substantially have any ion exchange group are present so as to be mixed with each other, and the domain width of each of the microdomain structures, that is, the identical cycle thereof is from several nanometers to several hundreds of nanometers according to observation with a transmission electron microscope (TEM). The micro phase separation structure is preferably a structure having microdomain structures of 5 to 100 nm size. The aromatic-based polymer electrolyte that easily gives a membrane of such a micro phase separation structure is a block polymer or graft copolymer having both of blocks which each have an acidic group and blocks which do not substantially have any ion exchange group. These copolymers can be preferably used since the different polymer blocks are bonded to each other through chemical bonds, whereby microscopic phase separation of the order of molecular chain size is easily generated. Among those copolymers, the block copolymer is particularly preferred.

In the above-mentioned preferred block copolymer, the "blocks which have an ion exchange group" mean blocks each containing an ion exchange group in a number of 0.5 or more on average in each of repeating units constituting the blocks, more preferably in a number of 1.0 or more on average in each of the repeating units. On the other hand, the "blocks which do not substantially have any ion exchange group" mean segments each containing an ion exchange group in a number of less than 0.5 on average in each of repeating units constituting the blocks, more preferably in a number of 0.1 or less on average, even more preferably in a number of 0.05 or less on average in each of the repeating units.

Particularly preferred typical examples of the block copolymer include block copolymers described in JP-A-2005-126684 and JP-A-2005-139432, which have an aromatic polyether structure and are made of blocks that have an ion exchange group and blocks that do not substantially have any ion exchange group. A block copolymer described in the pamphlet of International Publication WO 2006/95919, which has polyarylene blocks having acidic groups, can supply a membrane-electrode assembly more excellent in power generation performance by a synergic effect of the copolymer and the catalyst layer in the present invention since the block copolymer can form an electrolyte membrane in which ion conductivity and water resistance are attained at a light level.

About the molecular weight of the polymer electrolyte, an optimal range thereof can be appropriately obtained in accordance with the structure thereof, and the like. When the molecular weight is represented by polystyrene-converted number-average molecular weight according to GPC (gel permeation chromatography) method, the molecular weight is preferably from 1,000 to 1,000,000, The number-average molecular weight is preferably 5,000 or more, in particular preferably 10,000 or more while the molecular weight is preferably 500,000 or less, in particular preferably 300,000 or less.

Furthermore, the hydrocarbon-based electrolyte membrane according to the membrane-electrode assembly of the second embodiment of the present invention may contain, besides the polymer electrolyte exemplified above, a different component in accordance with desired characteristics as far as the proton conductivity is not remarkably lowered. Examples of the different component include an additive such as a plasticizer, a stabilizer, a releasing agent, and a water retention agent that are used in ordinary polymers.

In particular, when the fuel battery operates, a peroxide may be generated in the catalyst layer adjacent to the hydrocarbon-based electrolyte membrane and may then be changed to radical species while diffusing, so as to deteriorate the polymer electrolyte constituting the hydrocarbon-based electrolyte membrane. In order to avoid this inconvenience, it is preferred to add a stabilizer capable of giving radical resistance to the polymer electrolyte. A preferred example of the additive includes a stabilizer for heightening chemical stabilizations such as oxidation resistance and radical resistance. The stabilizer includes, for example, any additive given as an example in JP-A-2003-201403, JP-A-2003-238678 or JP-A-2003-282096, or a phosphonic-acid-group-containing polymer described in JP-A-2005-38834 or JP-A-2006-88891.

In order to improve the mechanical strength of the electrolyte membrane, it is allowable to use a composite membrane wherein the above-mentioned polymer electrolyte and a predetermined support are compounded or composed. The support may be a substrate material in the shape of a fibril, porous membrane, or the like. It is preferred to use, as the hydrocarbon-based electrolyte membrane used in the present invention, a hydrocarbon-based electrolyte membrane small in the film thickness since the resistance of the fuel battery can be decreased. The film thickness is preferably 200 μm or less, more preferably 150 μm or less, even more preferably 100 μm or less, in particular preferably 50 μm or less. If the film thickness of the hydrocarbon-based electrolyte membrane is too small, cross leakage of gases is easily caused. Thus, the film thickness is preferably 1 μm or more, more preferably 3 μm or more, in particular preferably 5 μm or more.

[Fuel battery]

Next, the following will describe a preferred embodiment of a fuel battery provided with the above-mentioned membrane-electrode assembly of the present invention based on the attached drawings in detail.

Fig. 1 is a vertical sectional view of a fuel battery cell of a preferred embodiment of the present invention. As illustrated in Fig. 1, a fuel battery 10 is provided with a membrane-electrode assembly 20. The membrane-electrode assembly 20 is composed of a polymer electrolyte membrane (hydrocarbon-based electrolyte, proton-conductive membrane) 12, and a pair of catalyst layers 14a and 14b between which this membrane is sandwiched. The fuel battery 10 includes gas diffusion layers 16a and 16b, and separators 18a and 18b. On both sides of the membrane-electrode assembly 20, the gas diffusion layers 16a and 16b, and the separators 18a and 18b are formed in an order so as to sandwich this assembly.

The catalyst layers 14a and 14b adjacent to the polymer electrolyte membrane (hydrocarbon-based electrolyte membrane) 12 in the membrane-electrode assembly 20 are layers functioning as electrode layers in the fuel battery. One of these layers is an anodic electrode layer, and the other is a cathodic electrode layer. The catalyst layers 14a and 14b are each preferably made of a catalytic composition containing: the above-mentioned hydrocarbon-based polymer electrolyte or fluorine-based polymer electrolyte such as Nafion (registered trademark); and the above-mentioned electrode catalyst.

In the present invention, in particular, in the first embodiment of the present invention, one of the catalyst layers 14a and 14b, preferably the cathodic electrode layer, is favorably an electrode catalyst wherein the above-mentioned base metal complex is used. The other catalyst is not particularly limited as far as the catalyst is a catalyst making it possible to activate redox reaction with hydrogen or oxygen. Examples thereof include noble metals, noble metal alloys, metal complexes, and metal complex fired products, which are each obtained by firing a metal complex. Among these, platinum fine particles are preferred as the catalyst. The catalyst layers 14a and 14b may each be a layer wherein platinum fine particles are carried on granular or fibrous carbon such as activated carbon or graphite.

In the present invention, in particular, in the second embodiment of the present invention, at least one of the catalyst layers 14a and 14b is an electrode catalyst containing the above-mentioned non-noble-based electrode catalyst. It is preferred that both of the catalyst layers are made of the above-mentioned non-noble-based electrode catalyst. The non-noble metal-based electrode catalyst may be used together with a noble metal-based electrode catalyst capable of activating redox reaction with hydrogen or oxygen. The noble metal-based catalyst is preferably made of platinum fine particles. The catalyst layers 14a and 14b may each be a layer wherein platinum fine particles are carried on granular or fibrous carbon such as activated carbon or graphite.

If the amount of platinum in the catalyst layer(s) is large, costs for producing the fuel battery is high; thus, it is preferred that the platinum amount in the catalyst layer(s) is smaller. In the case of defining the relationship P between the total mass of the base metal complex in the catalyst layer(s) and the total mass of the base metal complex and platinum in the catalyst layer(s) as shown by the following Equation (1), the value of P is preferably 0.8 or less, more preferably 0.7 or less, even more preferably 0.6 or less, in particular preferably 0.5 or less. The lower limit of P is preferably

0.

$$P = \text{(total mass of platinum in the catalyst layer(s))/(total mass of the base metal complex and platinum in the catalyst layer(s))} \qquad \text{Equation (1)}$$

The gas diffusion layers 16a and 16b are laid in such a manner that the membrane-electrode assembly 20 is sandwiched, on both sides thereof, therebetween. The gas diffusion layers 16a and 16b are layers for promoting the diffusion of raw material gases into the catalyst layers 14a and 14b. The gas diffusion layers 16a and 16b are preferably made of a porous material having electron conductivity. For example, porous carbon nonwoven cloth or carbon paper is preferred since the raw material gases can be effectively transported into the catalyst layers 14a and 14b.

The polymer electrolyte membrane (hydrocarbon-based electrolyte membrane) 12, the catalyst layers 14a and 14b, and the gas diffusion layers 16a and 16b constitute a membrane-electrode-(gas-diffusion-layer) assembly (MEGA). Such an MEGA can be produced by, for example, a method described below.

First, a solution containing a polymer electrolyte and a catalyst are mixed with each other to form a slurry of a catalytic composition. This is painted onto carbon nonwoven cloth, carbon paper pieces, or the like for forming the gas diffusion layers 16a and 16b by a spraying or screen printing method, and then the solvent and the like are evaporated to yield laminates, in each of which a catalyst layer is formed on one of the gas diffusion layers. A pair of the resultant laminates are arranged to face their catalyst layers to each other, and further the polymer electrolyte membrane (hydrocarbon-based electrolyte membrane) 12 is arranged therebetween. These members are then compressed onto each other and adhered to each other. In this way, an MEGA having the above-mentioned structure is obtained. The formation of each of the catalyst layers onto one side of the gas diffusion layers may be attained, for example, by painting the catalytic composition onto a predetermined substrate material (polyimide, poly(tetrafluoroethylene) or the like), drying the composition to form the catalyst layer, and then transferring this layer onto one side of the gas diffusion layer by hot press.

The separators 18a and 18b are made of a material having electron conductivity. Examples of this material include carbon, resin-molded carbon, titanium and stainless steel. It is preferred that in the separators 18a and 18b, grooves (not illustrated) which are to be channels for a fuel gas and the like are made on the catalyst layer 14a and 14b sides, respectively.

The fuel battery 10 can be obtained by sandwiching the MEGA as described above between the pair of the separators 18a and 18b, and then jointing these members to each other.

The fuel battery of the present invention is not necessarily limited to any fuel battery having the above-mentioned structure, and may appropriately have a different structure as far as the structure does not depart from the subject matter thereof.

The fuel battery 10 may be a fuel battery wherein a product having the above-mentioned structure is sealed with a gas sealing body or the like.

The fuel battery cell 10 illustrated in Fig. 1 is a minimum unit of a solid polymer type fuel battery. The power of any single cell is limited; thus, it is preferred that cells are connected to each other in series to give a necessary power, and then the resultant is put, as a fuel battery stack, into practical use.

The fuel battery of the present invention can be used as a solid polymer-type fuel battery when the fuel therefor is hydrogen, and can be used as a direct methanol-type fuel battery when the fuel is a solution of methanol in water.

The fuel battery provided with the membrane-electrode assembly of the present invention may be used as a power source for an automobile, a domestic power source, a small-sized power source for a mobile instrument such as a mobile phone or a mobile personal computer, or some other power source.

In the present invention, in particular, in the membrane-electrode assembly of the first embodiment of the present invention, a base metal complex catalyst is used as an electrode catalyst, so that a remarkably higher power generation property is exhibited than those of membrane-electrode assemblies comprising a conventional catalyst alternative to platinum. Moreover, costs therefor are also lower than those of membrane-electrode assemblies comprising a platinum catalyst. The fuel battery of the present invention, comprising such a membrane-electrode assembly, is excellent in power generation efficiency.

In the present invention, in particular, in the membrane-electrode assembly of the second embodiment of the present invention, a non-noble metal-based electrode catalyst and a hydrocarbon-based electrolyte membrane are used, whereby costs for producing the membrane-electrode assembly can be largely decreased, and an excellent stability is exhibited. Thus, about the fuel battery comprising this assembly, costs can be held down, and further an excellent stability is exhibited.

EXAMPLES

The present invention will be described in more detail based on the following examples, but the invention is not intended to be limited thereto.

Example 1

[Preparation of Electrode Catalyst (A)]

A base metal complex (A) was synthesized in accordance with the following reaction formula. A ligand as a raw material of the base metal complex illustrated below was synthesized with reference to the method described in "Tetrahedron", Vol. 55, p. 8377 (1999). In the formula, Me, Et and Ac represent a methyl group, an ethyl group, and an acetyl group, respectively.

[Chemical formula 4]

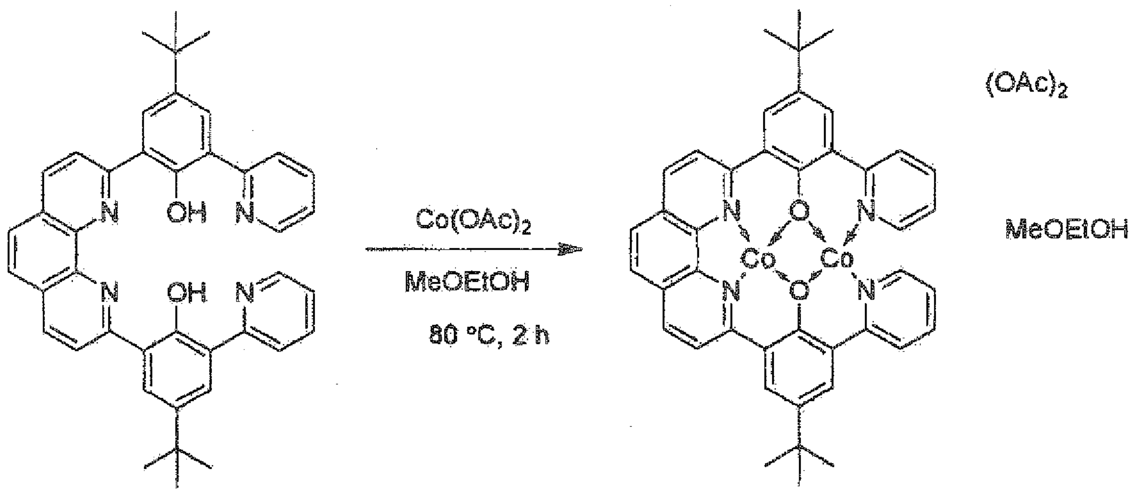


First, under a nitrogen atmosphere, 1.388 g of the ligand and 200 mL of 2-methoxyethanol solution containing 1.245 g of cobalt acetate tetrahydrate were loaded into a 500-mL egg plant flask, and the mixture was stirred for 2 hours while being heated at 80°C, whereby a brown solid was produced. The solid was taken by filtration, and was then washed with 20 mL of 2-methoxyethanol (MeOEtOH) and dried, whereby Base Metal Complex (A) was obtained (amount: 1.532g, yield: 74%). On the right side of the reaction formula, "$(OAc)_2$" denotes a matter that two equivalents of acetate ions are present as a counter ion, and "MeOEtOH" denotes a matter that a 2-methoxyethanol molecule is present as a ligand.

Elementary Analysis Value (%): (Calcd for $C_{49}H_{50}Co_2N_4O_8$)
(Calculated Value) C: 62.56, H: 5.36, N: 5.96, Co: 12.53
(Actual Measurement Value) C: 62.12, H: 5.07, N: 6.03, Co: 12.74

Then, Base Metal Complex (A) and a carbon carrier (Ketjen Black EC300J, manufactured by Lion Corporation) were mixed with each other in a mass ratio of 1:1 and the mixture was stirred at room temperature for 15 minutes in ethanol. Then, the mixture was dried at room temperature under a reduced pressure of 1.5 Torr (199.983 Pa) for 12 hours. A tubular furnace wherein a quartz tube was a furnace core tube was used to treat the mixture thermally at 700°C in a nitrogen flow of 200 mL/min flow rate for 2 hours, so as to yield Electrode Catalyst (A).

[Preparation of Catalytic Ink for Cathode]

Into 1.43 mL of a commercially available 5% by mass Nafion solution (solvent: a mixture of water and lower

alcohols) was incorporated 0.20 g of Electrode Catalyst (A) yielded as described above, and further thereto were added 11.2 mL of ethanol, and 2.1 mL of water. The resultant mixture was subjected to ultrasonic treatment for 1 hour, and then stirred with a stirrer for 5 hours, to yield a catalytic ink for a cathode.

[Preparation of Catalytic Ink for Anode]

Into 6 mL of a commercially available 5% by mass Nation solution (solvent: a mixture of water and lower alcohols) was incorporated 0.83 g of platinum-carried carbon wherein 50% by mass of platinum was carried (trade name: SA50BK, manufactured by N. E. Chemcat Corp.), and further thereto was added 13.2 mL of ethanol. The resultant mixture was subjected to ultrasonic treatment for 1 hour, and then stirred with a stirrer for 5 hours, to yield a catalytic ink for an anode.

[Formation of MEA]

With reference to the method described in JP-A-2004-089976, the catalytic inks were painted onto carbon cloths, respectively, by spraying so as to form an anodic electrode and a cathodic electrode.
First, prepared was a carbon cloth (having a water-repellency-treated surface) cut into an area 7 cm square corresponding to the gas diffusion layer of the fuel battery, and by a spraying method, the above-mentioned catalytic ink for an anode was painted on a region 5.2 cm square in the center of the water-repellency-treated surface of the cloth. At this time, the distance from the spraying opening to the membrane was set to 6 cm, and the stage temperature was set to 75°C. In the same way, the ink was then painted into the form of an overcoat, and then the resultant was allowed to stand still on the stage for 15 minutes to remove the solvent, thereby yielding a gas-diffusion-layer-attached anodic electrode wherein platinum was arranged in an amount of 0.6 mg/cm$^2$ (anodic-catalyst-layer-attached carbon cloth). In the same manner, the above-mentioned catalyst ink for a cathode was painted onto a carbon cloth by spraying to yield a gas-diffusion-layer-attached cathodic electrode wherein Base Metal Complex (A) was arranged in an amount of 0.6 mg/cm$^2$ (cathodic-catalyst-layer-attached carbon cloth).
The resultant catalyst-layer-attached carbon cloths were each cut into a region 5.2 cm square on which the catalyst layer was painted. The anodic-catalyst-layer-attached carbon cloth, the electrolyte membrane (Nafion 115 (registered trademark) manufactured by DuPont), and the cathodic-catalyst-layer-attached carbon cloth were successively laminated to bring each of the catalyst layers into contact with the electrolyte membrane, and the laminate was hot-pressed under at 120°C and 100 kgf/cm$^2$ (9.80665 MPa) for 15 minutes to yield a membrane-electrode assembly (MEA).

[Production of Fuel Battery Cell]

A commercially available JARI standard cell was used to produce a fuel battery cell. Specifically, separators made of carbon wherein a groove for a gas passage was made by cutting were arranged on both outsides of the obtained membrane-electrode assembly. Furthermore, on each of the outsides thereof, a current collector and an endplate were successively arranged. These members were bolted, thereby fabricating and producing a fuel battery cell having an effective membrane area of 25 cm$^2$.

[Evaluation of Power Generation Performance of Fuel Battery Cell]

While the resultant fuel battery cell was kept at 80°C, humidified hydrogen and humidified air were supplied to the anode and the cathode, respectively. At this time, the back pressure in a gas outlet in the cell was set to 0.1 MPaG. The humidification of each of the raw material gases was attained by passing the gas into a bubbler. The water temperature of the bubbler for hydrogen was set to 80°C, and that of the bubbler for air was set to 80°C. The gas flow rate of the hydrogen was set to 529 mL/min and that of the air was set to 1665 mL/min. When the electric current was swept, the voltage was recorded so as to evaluate the power generation performance of the fuel battery cell.
Fig. 2 is a current-voltage curve of the fuel battery cell produced as described above. Its vertical axis represents the cell voltage (V), and its transverse axis represents the current density (Acm$^{-2}$).
As shown in Fig. 2, it is understood that even in the case of using a membrane-electrode assembly comprising a base metal complex as an electrode catalyst, a high power generation property is exhibited as a fuel battery.

(Tafel Plot)

The values obtained in the evaluation were used to prepare a Tafel plot. The plot is shown in Fig. 3. Fig. 3 is a Tafel plot of the fuel battery cell comprising the membrane-electrode assembly in Example 1. Its vertical axis represents

the overvoltage (V), and its transverse axis represents the logarithm of the current density ($\log|i_c|$/Acm$^{-2}$).
As shown in Fig. 3, the exchange current density $i_0$ of the fuel cell battery comprising the membrane-electrode assembly of the present invention was used was $1.22 \times 10^{-3}$ Acm$^{-2}$ and the Tafel slope was 340 mV/decade.

Example 2

[Production of Non-Noble Metal-Based Electrode Catalyst (2A)]

A non-noble metal-based electrode catalyst (2A) was produced in accordance with a process described below.

(Preparation of Metal Complex (2A))

Metal Complex (2A) illustrated in the following reaction formula was prepared by a method described below.
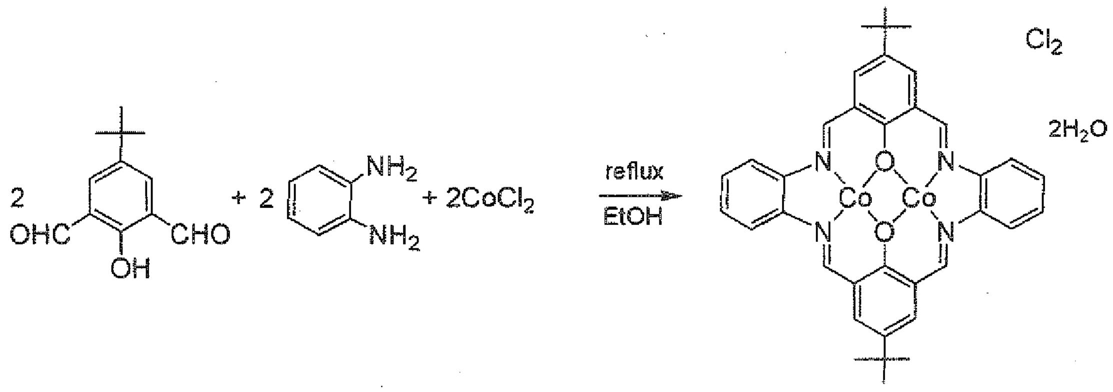


Under a nitrogen atmosphere, solution of 0.476 g of cobalt chloride hexahydrate and 0.412 g of 4-tert-butyl-2,6-diformylphenol in 10 mL of ethanol was charged into a 50-mL egg plant flask, and the solution was stirred at room temperature. Solution of 0.216 g of o-phenylenediamine in 5 mL of ethanol was gradually added to the solution. The above mixture was refluxed for 2 hours, whereby a brownish-red precipitate was produced. The precipitate was taken by filtration, and was then dried, whereby Metal Complex (2A) was obtained (amount: 0.465 g, yield: 63%). In the reaction formula, "$Cl_2$" denotes a matter that two equivalents of chloride ions are present as a counter ion, and "$2H_2O$" denotes a matter that two equivalents of water molecule are present as other ligand.

Elementary Analysis Value (%): (Calcd for $C_{36}H_{38}Cl_2Co_2N_4O_4$)
(Calculated Value) C, 55.47; H, 4.91; N, 7.19
(Actual Measurement Value) C, 56.34; H, 4.83; N, 7.23

(Preparation of Non-Noble Metal-Based Electrode Catalyst (2A))

Metal Complex (2A) and a carbon carrier (Ketjen black EC300J (trade name) manufactured by Lion Corporation) were mixed with each other at a ratio by mass of 1:1, and then the mixture was stirred in ethanol at room temperature for 15 minutes. Thereafter, the resultant was dried at room temperature under a reduced pressure of 1.5 Torr (199.983 Pa) for 12 hours. A tubular furnace wherein a quartz tube was a furnace core tube was used to treat the mixture thermally at 600°C in a nitrogen flow of 200 mL/min flow rate for 2 hours, so as to yield the non-noble metal-based electrode catalyst (2A).

[Production of Hydrocarbon-Based Electrolyte Membrane]

(Preparation of Polymer Electrolyte)

In accordance with the method described in Example 1 in the pamphlet of International Publication WO 2006/095919, a polymer electrolyte having a chemical formula illustrated below was yielded (polystyrene-converted number-average molecular weight: 120,000, and polystyrene-converted weight-average molecular weight: 230,000). The ion exchange capacity of the resultant polymer electrolyte was 2.2 meq/g. In the formula, the "block" means that

the compound of the formula illustrated below is a block copolymer comprising two kinds of blocks wherein the number of each of blocks is one or more.

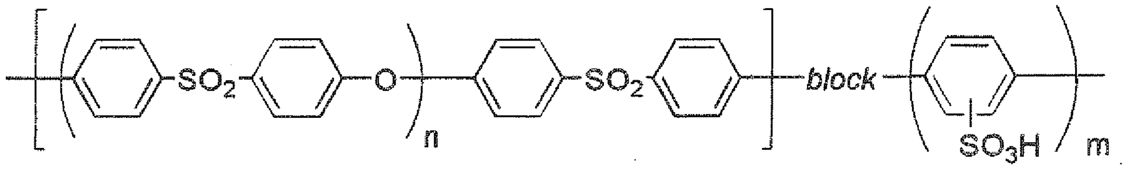

(Preparation of Additive)

Diphenylsulfone was used as a solvent to cause 4,4'-dihydroxydiphenylsulfone, 4,4'-dihydroxybiphenyl, and 4,4'-dichlorodiphenylsulfone to react with each other at a ratio by mole of 4:6:10 in the presence of potassium carbonate to prepare a random copolymer. Next, this copolymer was subjected to brominating treatment and phosphonating treatment in accordance with the method described in JP-A-2003-282096. Thereafter, the resultant was further hydrolyzed to yield Additive 1 having a structure containing a bromo-group in a number of about 0.2 and a phosphonic acid group (group represented by $-P(O)(OH)_2$) in a number of about 1.7 per unit originating from the biphenol structure.

(Production of Hydrocarbon-Based Electrolyte Membrane)

The polymer electrolyte and Additive 1 yielded as described above were mixed with each other at a ratio by mass of 9:1, and the mixture was dissolved into dimethylsulfoxide (DMSO) to give a concentration of about 15% by mass. In this way, a polymer electrolyte solution was prepared. Next, this polymer electrolyte solution was dropped onto a glass plate. A wire coater was then used to coat and spread the polymer electrolyte solution uniformly on the glass plate. At this time, the clearance of the wire coater was varied, thereby controlling the coat thickness. After the coating, the polymer electrolyte solution was dried at 80°C under normal pressure. The resultant membrane was then immersed into 1 N hydrochloric acid, and then washed with ion exchange water. The membrane was further dried at ambient temperature to yield a hydrocarbon-based electrolyte membrane having a film thickness of 30 $\mu$m.

[Preparation of Catalytic Ink for Cathode]

Into 1.43 mL of a commercially available 5% by mass Nafion solution (solvent: lower alcohols containing 15 to 20% by mass of water) was incorporated 0.2 g of the non-noble metal-based electrode catalyst (2A) yielded as described above, and further thereto were added 11.2 mL of ethanol, and 2.1 mL of water. The resultant mixture was subjected to ultrasonic treatment for 1 hour, and then stirred with a stirrer for 5 hours to yield a catalytic ink for a cathode.

[Preparation of Catalytic Ink for Anode]

Into 6 mL of a commercially available 5% by mass Nafion solution (solvent: lower alcohols containing 15 to 20 mass% of water) was incorporated 0.83 g of platinum-carried carbon wherein 50% by mass of platinum was carried (trade name: SA50BK, manufactured by N. E. Chemcat Corp.), and further thereto was added 13.2 mL of ethanol. The resultant mixture was subjected to ultrasonic treatment for 1 hour, and then stirred with a stirrer for 5 hours to yield a catalytic ink for an anode.

[[Formation of MEA]

Next, with reference to the method described in JP-A-2004-089976, the catalytic inks were painted onto the electrolyte membrane by spraying.
First, the above-mentioned catalytic ink for an anode was painted on a region 5.2 cm square in the center of the electrolyte membrane cut into an area 7 cm square by a spraying method. At this time, the distance from the spraying opening to the membrane was set to 6 cm, and the stage temperature was set to 75°C. In the same manner, the ink was repeatedly painted 8 times into the form of overcoats. Thereafter, the resultant was allowed to stand still on the stage for 15 minutes to remove the solvent, thereby forming a catalyst layer for an anode wherein the platinum catalyst was arranged in an

amount of 0.60 mg/$cm^2$ on the electrolyte membrane. In the same manner, the catalyst ink for a cathode was painted onto the opposite surface of the electrolyte membrane by spraying, so as to form a catalyst layer for a cathode wherein the non-noble metal-based electrode catalyst (2A) was arranged in an amount of 0.60 mg/$cm^2$ on the electrolyte membrane. In this way, a membrane-electrode assembly (MEA) was yielded. The value of each of the catalyst amounts is a value not including the amount of the carbon carrier.

[Evaluation of Power Generation Performance of Fuel Battery Cell]

A commercially available JARI standard cell was used to produce a fuel battery cell. Specifically, a carbon cloth cut into an area 5.2 cm square and a separator made of carbon wherein a groove for a gas passage was made by cutting were arranged on both outsides of the obtained membrane-electrode assembly. Furthermore, on each of the outsides thereof, a current collector and an endplate were successively arranged. These members were bolted, thereby fabricating and producing a fuel battery cell having an effective membrane area of 25 $cm^2$.

While the resultant fuel battery cell was kept at 30°C, humidified hydrogen and humidified air were supplied to the anode and the cathode, respectively. At this time, the back pressure in a gas outlet in the cell was set to 0.1 MPaG. The humidification of each of the raw material gases was attained by passing the gas into a bubbler. The water temperature of the bubbler for hydrogen was set to 30°C, and that of the bubbler for air was set to 30°C. The gas flow rate of the hydrogen was set to 529 mL/min and that of the air was set to 1665 mL/min. When the electric current was swept, the voltage was recorded so as to evaluate the power generation performance of the fuel battery cell.

Fig. 4 is a current-voltage curve of the fuel battery cell produced as described above. Its vertical axis represents the cell voltage (V), and its transverse axis represents the current density ($Acm^{-2}$).

Example 3

[Production of Non-Noble Metal-Based (Electrode Catalyst (2B)]

A non-noble metal-based electrode catalyst (2B) was produced in accordance with a process described below.

(Preparation of Metal Complex (2B))

Metal Complex (2B) represented by a reaction formula illustrated below was prepared by a method described below. A ligand as a raw material was synthesized with reference to the method described in "Tetrahedron", Vol. 55, p. 8377 (1999). In the formula, Me, Et and Ac represent a methyl group, an ethyl group and an acetyl group, respectively.

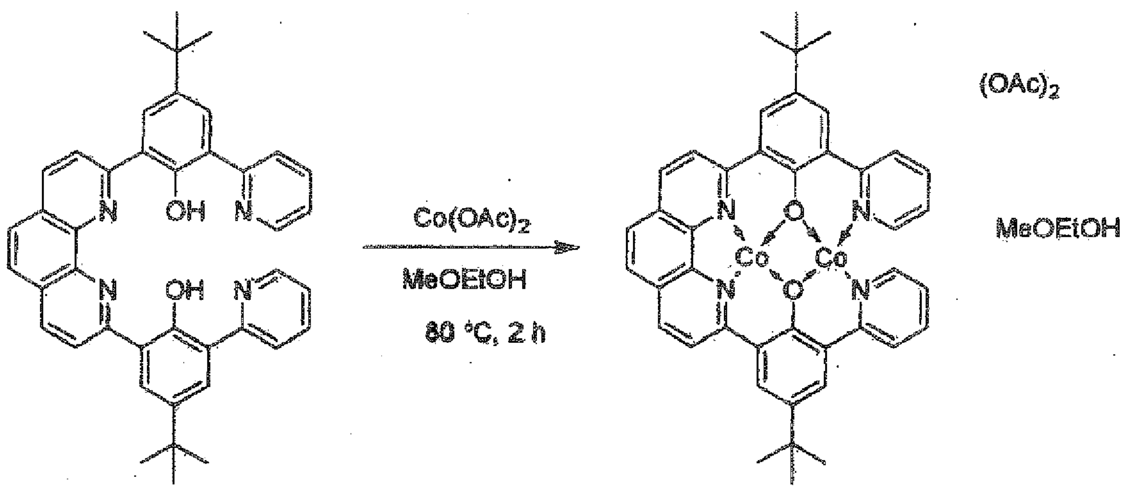


(2 B)

First, under a nitrogen atmosphere, 1.388 g of the ligand and 200 mL of 2-methoxyethanol solution containing 1.245 g of cobalt acetate tetrahydrate were loaded into a 500-mL egg plant flask, and the mixture was stirred for 2 hours while being heated at 80°C, whereby a brown solid was produced. The solid was taken by filtration, and was then washed with 20 mL of 2-methoxyethanol (MeOEtOH) and dried, whereby Metal Complex (2B) was obtained (amount: 1.532 g, yield: 74%). On the right side of the reaction formula, "$(OAc)_2$" denotes a matter that two equivalents of acetate ions are present as a counter ion, and "MeOEtOH" denotes a matter that a 2-methoxyethanol molecule is present as a ligand.

Elementary Analysis Value (%): (Calcd for $C_{49}H_{50}Co_2N_4O_8$)
(Calculated Value) C: 62.56, H: 5.36, N: 5.96, Co: 12.53
(Actual Measurement Value) C: 62.12, H: 5.07, N: 6.03, Co: 12.74

(Preparation of Non-Noble Metal-Based Electrode Catalyst (2B))

Metal Complex (2B) and a carbon carrier (Ketjen black EC600JD (trade name) manufactured by Lion Corporation) were mixed with each other at a ratio by mass of 1:4, and then the mixture was stirred in ethanol at room temperature for 15 minutes. Thereafter, the resultant was dried at room temperature under a reduced pressure of 1.5 Torr (199.983 Pa) for 12 hours. A tubular furnace wherein a quartz tube was a furnace core tube was used to treat the mixture thermally at 800°C in a nitrogen flow of 200 mL/min flow rate for 2 hours, so as to yield the non-noble metal-based electrode catalyst (2B).

[Production of Hydrocarbon-Based Electrolyte Membrane]

(Preparation of Polymer Electrolyte)

In accordance with the method described in Example 1 in the pamphlet of International Publication WO 2006/095919, a polymer electrolyte having a chemical formula illustrated below was yielded (polystyrene-converted number-average molecular weight: 120,000, and polystyrene-converted weight-average molecular weight: 230,000). The ion exchange capacity of the resultant polymer electrolyte was 2.5 meq/g. In the formula, the "block" means that the compound of the formula illustrated below is a block copolymer comprising two kinds of blocks wherein the number of the each of the blocks is one or more blocks.
[Chemical formula 8]

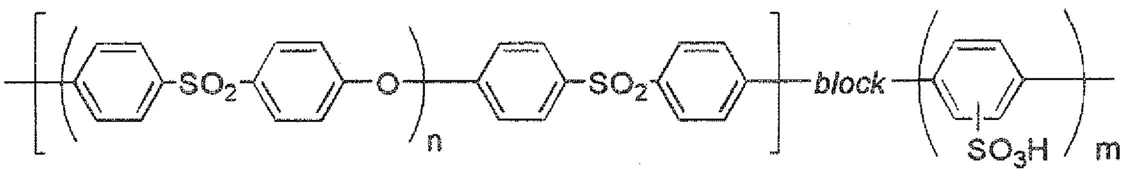

(Production of Hydrocarbon-Based Electrolyte Membrane)

The polymer electrolyte and Additive 1 yielded as described above were dissolved into dimethylsulfoxide (DMSO) to give a concentration of about 15% by mass. In this way, a polymer electrolyte solution was prepared. Next, this polymer electrolyte solution was dropped onto a glass plate. A wire coater was then used to coat and spread the polymer electrolyte solution uniformly on the glass plate. At this time, the clearance of the wire coater was varied, thereby controlling the coat thickness. After the coating, the polymer electrolyte solution was dried at 80°C under normal pressure. The resultant membrane was then immersed into 1 N hydrochloric acid, and then washed with ion exchange water. The membrane was further dried at ambient temperature to yield a hydrocarbon electrolyte membrane having a film thickness of 20 μm.

[Preparation of Catalytic Ink for Cathode]

Into 7.56 g of a commercially available 5% by mass Nafion solution (solvent: a mixture of water and lower alcohols) was incorporated 0.75 g of the non-noble metal-based electrode catalyst (2B) yielded as described above, and further thereto were added 35.5 g of ethanol, and 5.25 g of water. The resultant mixture was subjected to ultrasonic treatment for 1 hour, and then stirred with a stirrer for 5 hours to yield a catalytic ink for a non-noble metal-based electrode

(2B).

[Preparation of Catalytic Ink for Anode]

Into 6 mL of a commercially available 5% by mass Nafion solution (solvent: a mixture of water and lower alcohols) was incorporated 0.83 g of platinum-carried carbon wherein 50% by mass of platinum was carried (trade name: SA50BK, manufactured by N. E. Chemcat Corp.), and further thereto was added 13.2 mL of ethanol. The resultant mixture was subjected to ultrasonic treatment for 1 hour, and then stirred with a stirrer for 5 hours to yield a catalytic ink for an anode.

[Formation of MEA]

Next, with reference to the method described in JP-A-2004-089976, the catalytic inks were painted onto the electrolyte membrane by spraying.
First, the above-mentioned catalytic ink for an anode was painted on a region 5.2 cm square in the center of the electrolyte membrane cut into an area 7 cm square by a spraying method. At this time, the distance from the spraying opening to the membrane was set to 6 cm, and the stage temperature was set to 75°C. In the same manner, the ink was repeatedly painted 8 times into the form of overcoats. Thereafter, the resultant was allowed to stand still on the stage for 15 minutes to remove the solvent, thereby forming a catalyst layer for an anode wherein the platinum-carried carbon was arranged in an amount of 0.6 mg/cm$^2$ on the electrolyte membrane. In the same manner, the catalyst ink for a cathode was painted onto the opposite surface of the electrolyte membrane by spraying, so as to form a catalyst layer for a cathode wherein the non-noble metal-based electrode catalyst (2B) was arranged in an amount of 0.76 mg/cm$^2$ on the electrolyte membrane. In this way, a membrane-electrode assembly (MEA) was yielded. The value of each of the catalyst amounts is a value not including the amount of the carbon carrier.

[Evaluation of Power Generation Performance of Fuel Battery Cell]

A commercially available JARI standard cell was used to produce a fuel battery cell. Specifically, a carbon cloth cut into an area 5.2 cm square and a separator made of carbon wherein a groove for a gas passage was made by cutting were arranged on both outsides of the obtained membrane-electrode assembly. Furthermore, on each of the outsides thereof, a current collector and an endplate were successively arranged. These members were bolted, thereby fabricating and producing a fuel battery cell having an effective membrane area of 25 cm$^2$.
While the resultant fuel battery cell was kept at 80°C, humidified hydrogen and humidified air were supplied to the anode and the cathode, respectively. At this time, the back pressure in a gas outlet in the cell was set to 0.1 MPaG. The humidification of each of the raw material gases was attained by passing the gas into a bubbler. The water temperature of the bubbler for hydrogen was set to 70°C, and that of the bubbler for air was set to 70°C. The gas flow rate of the hydrogen and that of the air were set to 70 mL/min and 174 mL/min, respectively, to generate electric power from the fuel battery cell.
Fig. 5 is a plot of the current density relative to elapsing time when the fuel battery cell produced as described above was driven at a constant voltage of 0.4 V. Its vertical axis represents the cell voltage (V), and its transverse axis represents the elapsing time (h: hour(s)).
Next, the fuel battery cell produced as described above was used to set the gas flow rate of the hydrogen and that of the air to 529 mL/min and 1665 mL/min, respectively, and the electric current was swept. The voltage at this time was recorded so as to evaluate the power generation performance of the fuel battery cell.
Fig. 6 is a current-voltage curve of the fuel battery cell produced as described above. Its vertical axis represents the cell voltage (V), and its transverse axis represents the current density (Acm$^{-2}$).

Example 4

The fuel battery cell produced in Example 3 was used, and connected in such a manner that the non-noble metal-based electrode catalyst (2B) and the platinum-carried carbon were provided on its anodic side and its cathodic side, respectively. Thereafter, the gas flow rate of the hydrogen and that of the air were set to 529 mL/min and 1665 mL/min, respectively, and then the electric current was swept. The voltage at this time was recorded so as to evaluate the power generation performance of the fuel battery cell.
Fig. 7 is a current-voltage curve of the fuel battery cell produced as described above wherein the non-noble metal-based electrode catalyst (2B) was used as the anodic side (hydrogen electrode side) catalyst. Its vertical axis represents the cell voltage (V), and its transverse axis represents the current density (Acm$^{-2}$).

Example 5

[Production of Non-Noble Metal-Based Electrode Catalyst (3C)]

A non-noble metal-based electrode catalyst (3C) was produced in accordance with a process described below.

(Preparation of Metal Complex (3C))

In accordance with a reaction formula illustrated below, Metal Complex (3C) was synthesized via Compound (3A), Compound (3B) and Compound (3C).

[Synthesis of Compound (3A)]

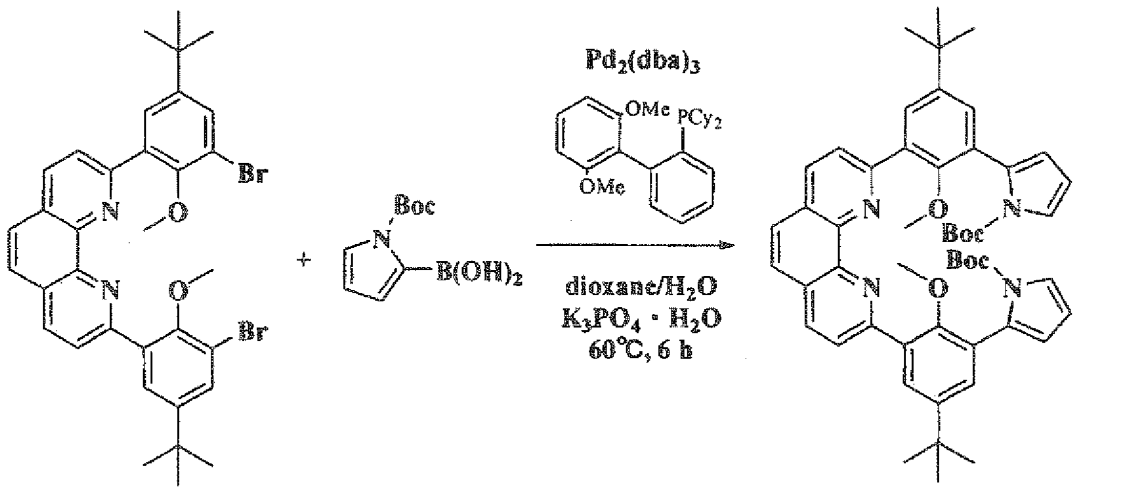


Compound (3A)

Under an argon atmosphere, 3.945 g of 2,9-di(3'-bromo-5'-tert-butyl-2'-methoxyphenyl)-1,10-phenanthroline, 3.165 g of 1-N-Boc-pyrrole-2-boronic acid, 0.138 g of tris(benzylideneacetone)dipalladium, 0.247 g of 2-dicyclohexylphosphino-2',6'-dimethoxybiphenyl, and 5.527 g of potassium phosphate were dissolved in mixed solvent of 200 mL of dioxane and 20 mL of water, and the solution was stirred at 60°C for 6 hours. After the completion of the reaction, the solution was left standing to cool, distilled water and chloroform were added to the solution, and an organic layer was extracted. The resultant organic layer was concentrated, whereby a black residue was obtained. The residue was purified with a silica gel column, whereby Compound (3A) was obtained.
$^1$H-NMR (300 MHz, $CDCl_3$) δ 1.34 (s, 18H), 1.37 (s, 18H), 3.30 (s, 6H), 6.21 (m, 2H), 6.27 (m, 2H), 7.37 (m, 2H), 7.41 (s, 2H), 7.82 (s, 2H), 8.00 (s, 2H), 8.19 (d, J = 8.6 Hz, 2H), 8.27 (d, J = 8.6 Hz, 2H)

[Synthesis of Compound (3B)]

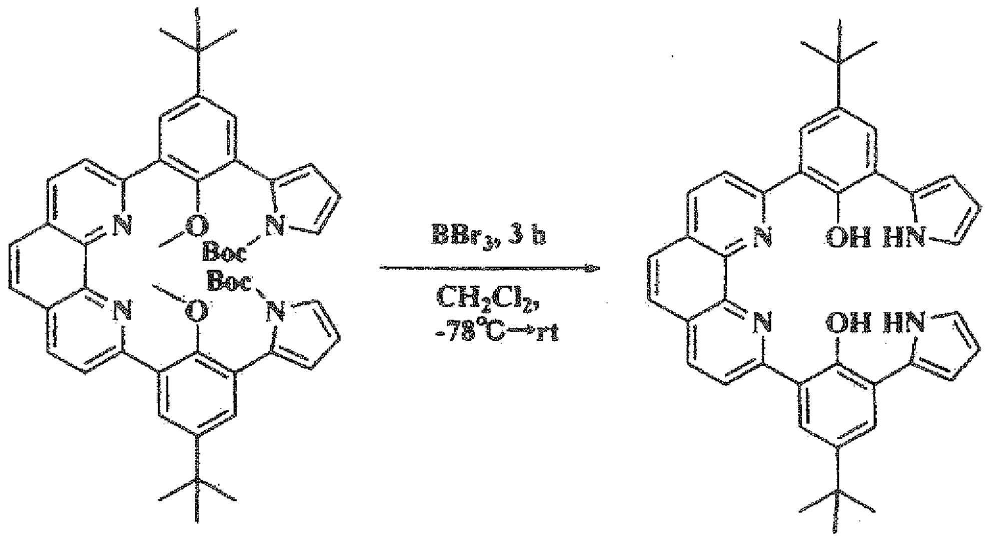


Compound (3A) Compound (3B)

Under a nitrogen atmosphere, 0.904 g of Compound (3A) was dissolved in 10 mL of anhydrous dichloromethane. While the dichloromethane solution was cooled to -78°C, 8.8 mL of boron tribromide (1.0-M dichloromethane solution) was slowly dropped to the dichloromethane solution. After the dropping, the mixture was stirred without any change for 10 minutes, and was then left to stand while being stirred so that its temperature might reach room temperature. Three (3) hours after that, the reaction solution was cooled to 0°C, and a saturated aqueous solution of $NaHCO_3$ was added to the solution. After that, an organic layer was extracted by adding chloroform to the mixture, and was then concentrated. The obtained brown residue was purified with a silica gel column, whereby Compound (3B) was obtained.
$^1$H-NMR (300 MHz, $CDCl_3$) δ 1.40 (s, 18H), 6.25 (m, 2H), 6.44 (m, 2H), 6.74 (m, 2H), 7.84 (s, 2H), 7.89 (s, 2H), 7.92 (s, 2H), 8.35 (d, J = 8.4 Hz, 2H), 8.46 (d, J = 8.4 Hz, 2H), 10.61 (s, 2H), 15.88 (s, 2H)

[Synthesis of Compound (3C)]

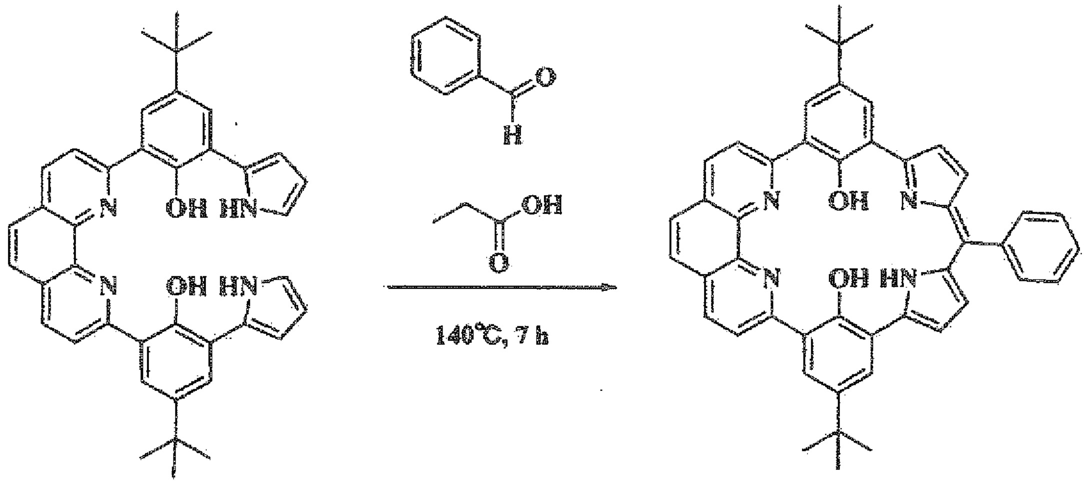


Compound (3B) Compound (3C)

Into 5 mL of propionic acid were dissolved 0.061 g of Compound (3B) and 0.012 g of benzaldehyde, and the solution was heated at 140°C for 7 hours. Thereafter, propionic acid was distilled off, and the resultant black residue was purified through a silica gel column to yield Compound (3C). The operation was repeated to yield 0.2 g of Compound (3C).
$^1$H-NMR (300 MHz, $CDCl_3$) δ 1.49 (s, 18H), 6.69 (d, J = 4.8 Hz, 2H), 7.01 (d, J = 4.8 Hz, 2H), 7.57 (m, 5H), 7.90 (s, 4H), 8.02 (s, 2H), 8.31 (d, J = 8.1 Hz, 2H), 8.47 (d, J = 8.1 Hz, 2H)

[Synthesis of Metal Complex (3C)]

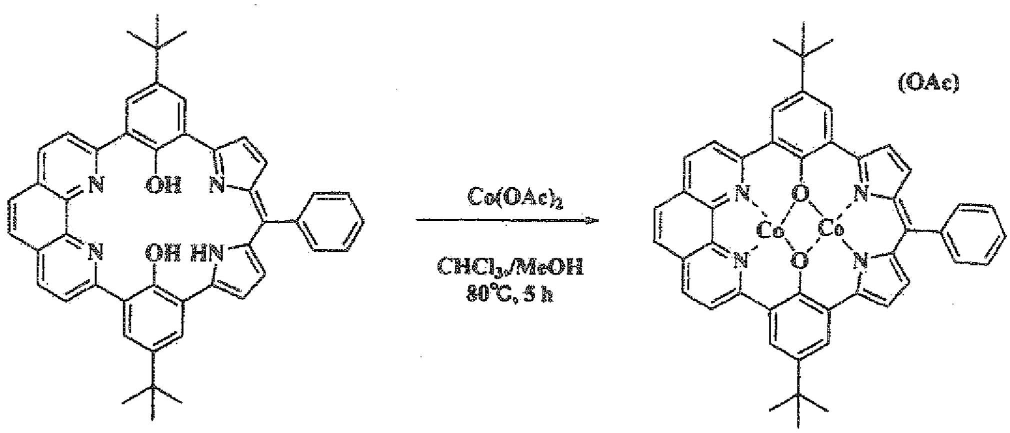


Compound (3c) Metal complex (3c)

While a mixed solution of 15 mL of methanol and 25 mL of chloroform containing 0.20 g of Compound (3C) and 0.17 g of cobalt acetate tetrahydrate was stirred in the atmosphere of nitrogen, the solution was refluxed for 5 hours. The resultant solution was concentrated and dried to be solidified. As a result, a blue solid was yielded. This was washed with water to yield Metal Complex (3C). ESI-MS [M+·]: 866.0

(Preparation of Non-Noble Metal-Based Electrode Catalyst (3C))

Metal Complex (3C) and a carbon carrier (Ketjen black EC300J (trade name) manufactured by Lion Corporation) were mixed with each other at a ratio by mass of 1:4, and then the mixture was stirred in ethanol at room temperature for 15 minutes. Thereafter, the resultant was dried at room temperature under a reduced pressure of 1.5 Torr (199.983 Pa) for 12 hours. A tubular furnace wherein a quartz tube was a furnace core tube was used to treat the mixture thermally at 600°C in a nitrogen flow of 200 mL/min flow rate for 2 hours, so as to yield the non-noble metal-based electrode catalyst (3C).

[Preparation of Catalytic Ink for Non-Noble Metal-Based Electrode (3C)]

Into 4.61 g of a commercially available 5% by mass Nafion solution (solvent: a mixture of water and lower alcohols) was incorporated 0.46 g of the non-noble metal-based electrode catalyst (3C) yielded as described above, and further thereto were added 3.29 g of water, and 21.65 g of ethanol. The resultant mixture was subjected to ultrasonic treatment for 1 hour, and then stirred with a stirrer for 5 hours to yield a catalytic ink for a non-noble metal-based electrode (3C).

[Production of MEA]

In accordance with the above-mentioned method, the non-noble metal-based electrode catalyst (3C) prepared as described above was painted onto the same surface as the electrolyte membrane as used in Example 3, and the non-noble metal-based electrode catalyst (3B) prepared in Example 3 was painted onto the opposite surface by spraying,

so as to form a membrane-electrode assembly (MEA). In one of the surfaces of the formed membrane-electrode assembly, the non-noble metal-based electrode catalyst (3B) was arranged in an amount of 0.60 $mg/cm^2$; in the opposite surface, the non-noble metal-based electrode catalyst (3C) was arranged in amount of 0.54 $mg/cm^2$. The value of each of the catalyst amounts is a value not including the amount of the carbon carrier.

[Evaluation of Power Generation Performance of Fuel Battery Cell]

The membrane-electrode assembly yielded as described above was used to produce a fuel battery cell in accordance with the method described in Example 3. The cell was connected in such a manner that the non-noble metal-based electrode catalyst (3B) and the non-noble metal based electrode catalyst (3C) were on the hydrogen side and on the air side, respectively. The gas flow rate of the hydrogen and that of the air were then set to 529 mL/min and 1665 mL/min, respectively, and the opened circuit voltage of the fuel battery cell was measured. As a result, the voltage was 0.76 V.

As shown in Examples 2 to 5, in the fuel battery comprising a membrane-electrode assembly having a non-noble metal-based electrode catalyst and a hydrocarbon-based electrolyte membrane, the use amount of the noble metal therein can be set to 1/2 or less without deteriorating in the power generation performance; thus, costs for producing fuel batteries can be largely reduced. Additionally, the result of Example 3 demonstrates that when the membrane-electrode assembly having a non-noble metal-based electrode catalyst and a hydrocarbon-based electrolyte membrane is used, electric power is stably generated.

INDUSTRIAL APPLICABILITY

According to the present invention, costs for producing membrane-electrode assemblies can be largely reduced. Further, the fuel battery provided with the membrane-electrode assembly of the present invention may be used as a power source for an automobile, a domestic power source, a small-sized power source for a mobile instrument such as a mobile phone or a mobile personal computer, or some other power source.

Having described our invention as related to the present embodiments, it is our intention that the invention not be limited by any of the details of the description, unless otherwise specified, but rather be construed broadly within its spirit and scope as set out in the accompanying claims.

This non-provisional application claims priority under 35 U.S.C. § 119 (a) on Patent Application No. 2007-061040 filed in Japan on March 9, 2007, and Patent Application No. 2007-084371 filed in Japan on March 28, 2007, each of which is entirely herein incorporated by reference.

## Claims

1. A membrane-electrode assembly, comprising an electrode catalyst containing a base metal complex, wherein exchange current density $i_0$ obtained from a Tafel plot, which is related to current density and voltage, is $5.0 \times 10^{-4}$ $Acm^{-2}$ or more, and wherein a Tafel slope obtained from the Tafel plot is 450 mV/decade or less.

2. The membrane-electrode assembly according to Claim 1, wherein the base metal complex is a base metal complex comprising, as a ligand, a compound having two or more phenol rings and two or more aromatic heterocycles.

3. The membrane-electrode assembly according to Claim 1 or 2, wherein the base metal complex is a base metal complex comprising a base metal atom selected from the group consisting of vanadium, chromium, manganese, iron, cobalt, nickel, copper, zirconium, niobium, molybdenum, tantalum and tungsten.

4. The membrane-electrode assembly according to any one of Claims 1 to 3, wherein the number of base metal atoms contained in one molecule of the base metal complex is 1 or more and 10 or less.

5. The membrane-electrode assembly according to any one of Claims 1 to 4, wherein the electrode catalyst containing a base metal complex is a catalyst subjected to heating treatment at a temperature of 300°C or higher and 1,200°C or lower.

6. A fuel battery, comprising the membrane-electrode assembly according to any one of Claims 1 to 5.

7. A membrane-electrode assembly, comprising catalyst layers each containing an electrode catalyst on both sides of an electrolyte membrane, wherein at least one of the catalyst layers comprises a non-noble metal-based electrode

catalyst, and wherein the electrolyte membrane is a hydrocarbon-based electrolyte membrane.

**8.** The membrane-electrode assembly according to Claim 7, wherein the non-noble metal-based electrode catalyst is an electrode catalyst comprising a non-noble metal complex.

**9.** The membrane-electrode assembly according to Claim 7 or 8, wherein the hydrocarbon-based electrolyte membrane comprises an aromatic hydrocarbon-based polymer electrolyte.

**10.** The membrane-electrode assembly according to any one of Claims 7 to 9, wherein the hydrocarbon-based electrolyte membrane is an aromatic hydrocarbon-based electrolyte membrane having proton conductivity.

**11.** A fuel battery, comprising the membrane-electrode assembly according to any one of Claims 7 to 10.

[Fig. 1]

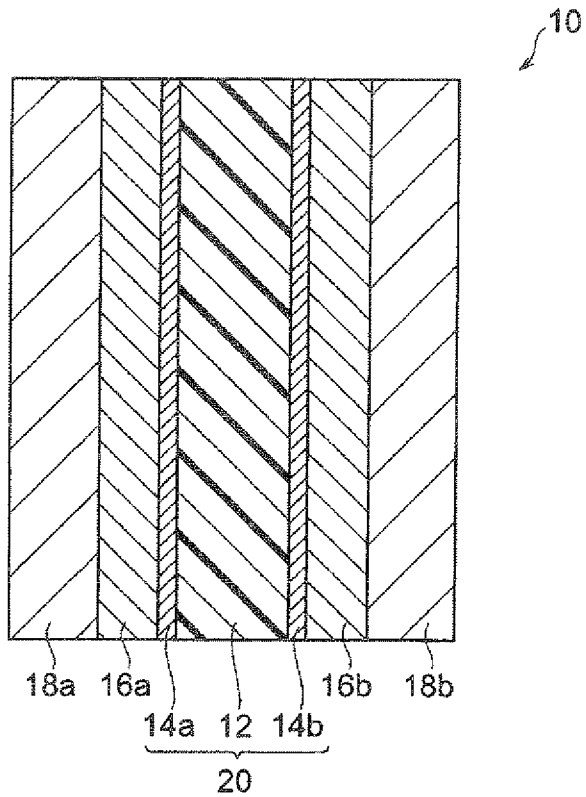
10
18a
16a
14a
12
14b
16b
18b
20

[Fig. 2]

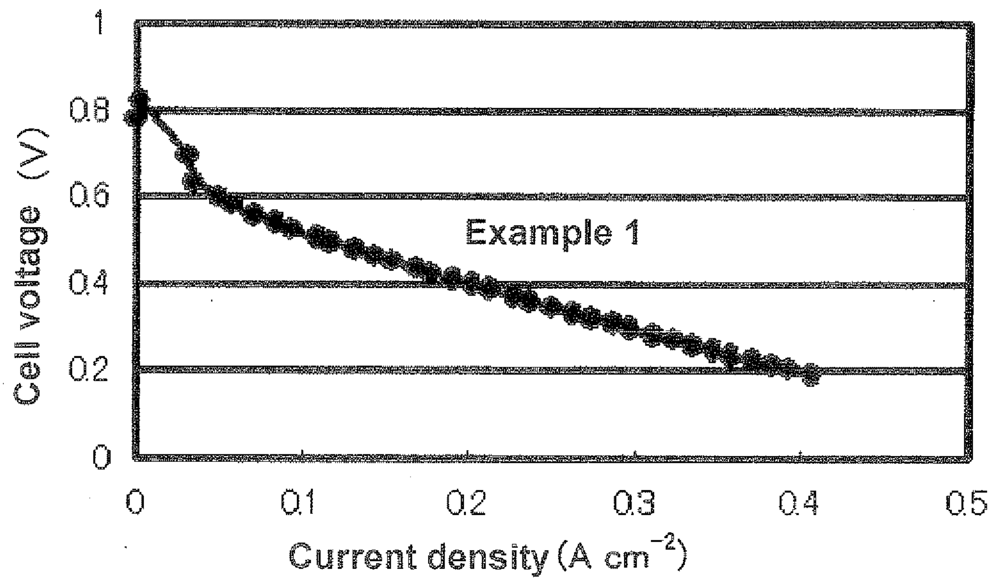
Cell voltage (V)
1
0.8
0.6
0.4
0.2
0
Example 1
0
0.1
0.2
0.3
0.4
0.5
Current density (A cm-2)

[Fig. 3]

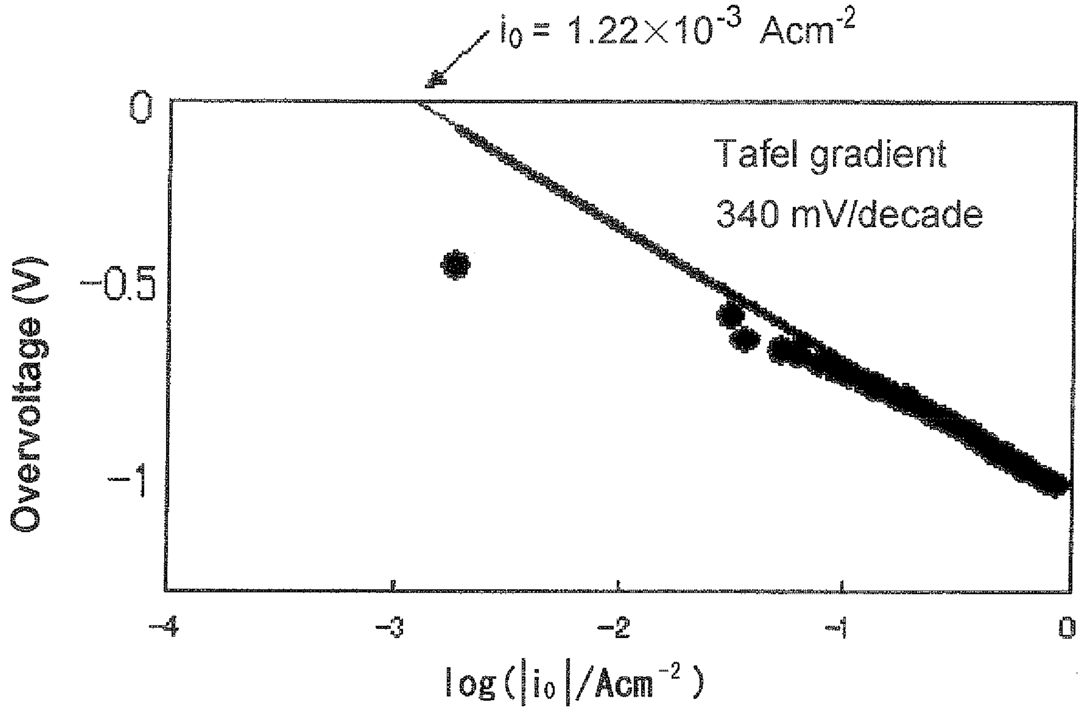
$i_0 = 1.22\times10^{-3}$ $Acm^{-2}$
Tafel gradient
340 mV/decade
0
−0.5
−1
Overvoltage (V)
−4
−3
−2
−1
0
log(|$i_0$|/$Acm^{-2}$)

[Fig. 4]

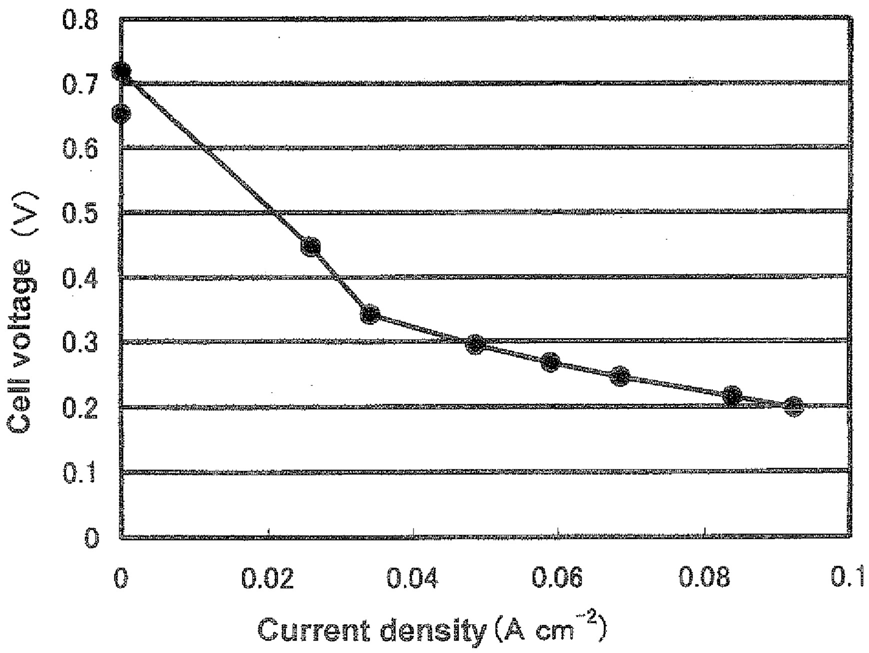
0.8
0.7
0.6
0.5
0.4
0.3
0.2
0.1
0
Cell voltage (V)
0
0.02
0.04
0.06
0.08
0.1
Current density (A $cm^{-2}$)

[Fig. 5]

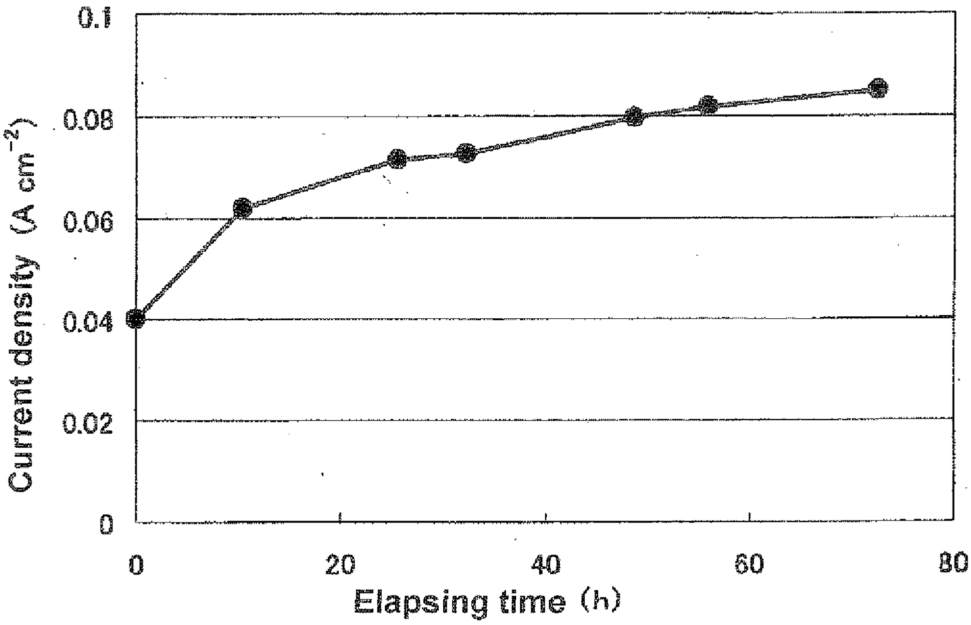
Current density (A cm$^{-2}$)
0.1
0.08
0.06
0.04
0.02
0
0
20
40
60
80
Elapsing time (h)

[Fig. 6]

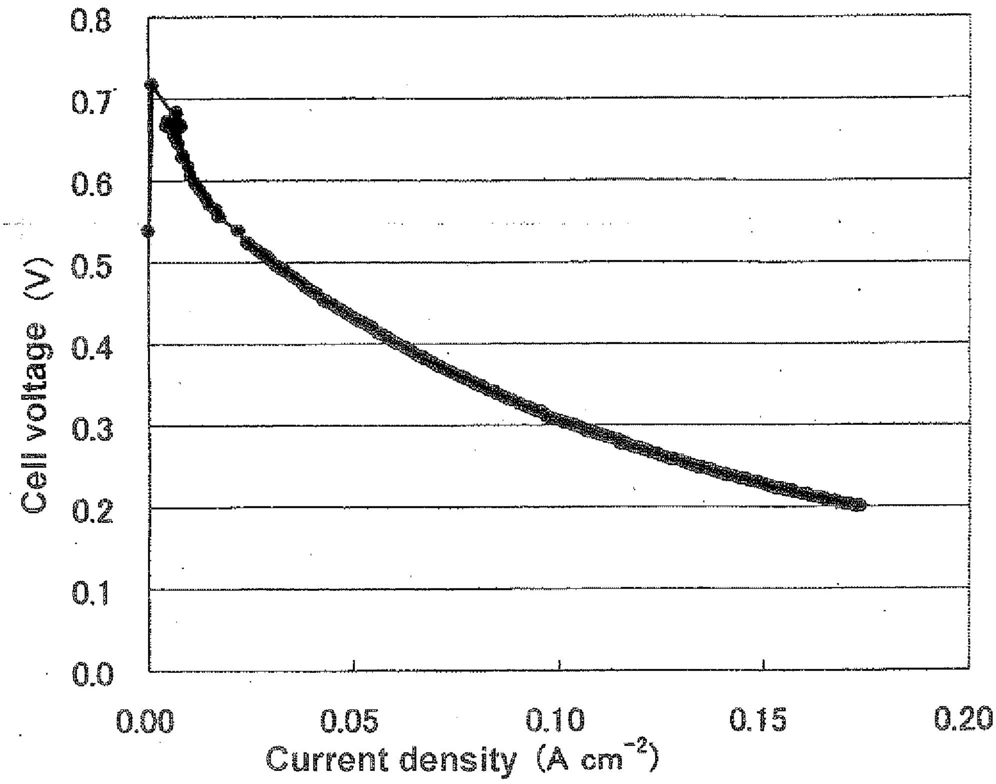
Cell voltage (V)
0.8
0.7
0.6
0.5
0.4
0.3
0.2
0.1
0.0
0.00
0.05
0.10
0.15
0.20
Current density (A cm$^{-2}$)

[Fig. 7]

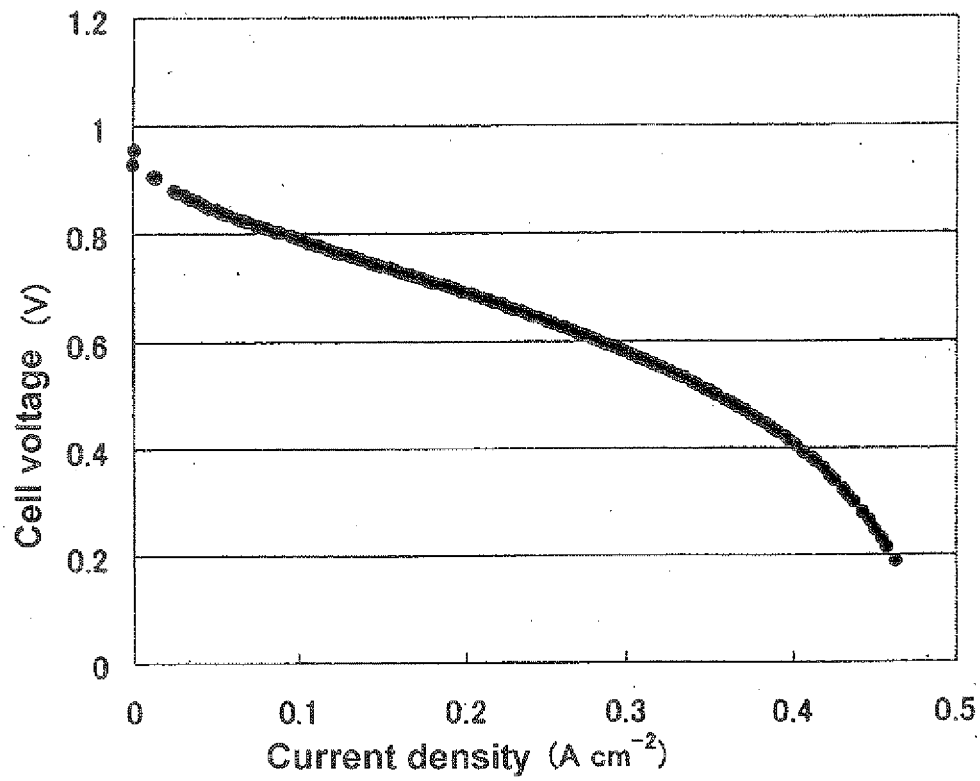
1.2
1
0.8
0.6
0.4
0.2
0
Cell voltage (V)
0
0.1
0.2
0.3
0.4
0.5
Current density (A cm⁻²)

| INTERNATIONAL SEARCH REPORT | International application No. PCT/JP2008/054331 |
|---|---|

A. CLASSIFICATION OF SUBJECT MATTER
*H01M4/90*(2006.01)i, *H01M8/02*(2006.01)i, *H01M8/10*(2006.01)i

According to International Patent Classification (IPC) or to both national classification and IPC

B. FIELDS SEARCHED

Minimum documentation searched (classification system followed by classification symbols)
H01M4/90, H01M8/02, H01M8/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2006-35186 A (Toyota Central Research and Development Laboratories, Inc.), 09 February, 2006 (09.02.06), Claims; Par. No. [0059]; Fig. 1 (Family: none) | 1-6 |
| Y | JP 5-82135 A (Japan Fine Ceramics Center), 02 April, 1993 (02.04.93), Claims; Par. No. [0030] (Family: none) | 1-6 |
| Y | JP 6-111829 A (Japan Fine Ceramics Center), 22 April, 1994 (22.04.94), Claims; Par. No. [0030] (Family: none) | 1-6 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 21 May, 2008 (21.05.08) | 03 June, 2008 (03.06.08) |
| Name and mailing address of the ISA/ Japanese Patent Office | Authorized officer |
| Facsimile No. | Telephone No. |

Form PCT/ISA/210 (second sheet) (April 2007)

**INTERNATIONAL SEARCH REPORT**

International application No.
PCT/JP2008/054331

C (Continuation). DOCUMENTS CONSIDERED TO BE RELEVANT

| Category* | Citation of document, with indication, where appropriate, of the relevant passages | Relevant to claim No. |
|---|---|---|
| Y | JP 5-258755 A (Stonehart Associates Inc.), 08 October, 1993 (08.10.93), Claims; Par. Nos. [0013] to [0016] & US 5294232 A Claims; column 4, line 56 to column 6, line 8 | 1-6 |
| Y | JP 62-24565 A (Tanaka Kikinzoku Kogyo Kabushiki Kaisha), 02 February, 1987 (02.02.87), Claims; page 3, lower right column, lines 8 to 17 (Family: none) | 1-6 |
| Y | JP 2006-351270 A (Nissan Motor Co., Ltd.), 28 December, 2006 (28.12.06), Claims; Par. No. [0030] (Family: none) | 1-6 |

Form PCT/ISA/210 (continuation of second sheet) (April 2007)

**INTERNATIONAL SEARCH REPORT**

International application No. PCT/JP2008/054331

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

In order that a group of inventions described in the claims comply with the requirement of unity of invention, a special technical feature for linking the group of inventions so as to form a single general inventive concept should exist. Two inventions classified into the invention of claims 1 to 6 and the invention of claims 7 to 11 are described in the claims of the international application.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.:
Claims 1 to 6

**Remark on Protest** the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

**INTERNATIONAL SEARCH REPORT**

International application No.
PCT/JP2008/054331

Continuation of Box No.III of continuation of first sheet(2)

In order that a group of inventions described in the claims comply with the requirement of unity of invention, a special technical feature for linking the group of inventions so as to form a single general inventive concept should exist. The group of inventions described in claims 1 to 11 are linked to each other only in the matter "membrane-electrode assembly comprising an electrode catalyst using a base metal".

This matter, however, is described in prior art documents, for example, in JP 2006-26605 A (Toyota Jidosha Kabushiki Kaisha) 2006. 02. 02, JP 2006-85976 A (NATIONAL INSTITUTE OF ADVANCED INDUSTRIAL SCIENCE AND TECHNOLOGY) 2006. 03. 30, and JP 2005-228497 A (NATIONAL INSTITUTE OF ADVANCED INDUSTRIAL SCIENCE AND TECHNOLOGY) 2005. 08. 25 and thus cannot be a special technical feature.

Accordingly, there is no special technical feature among the group of inventions described in claims 1 to 11 so linked as to form a single general inventive concept. Thus, it is apparent that the group of inventions described in claims 1 to 11 do not comply with the requirement of unity of invention.

Next, the number of invention groups described in the claims of this international application and so linked as to form a single general inventive concept, that is, the number of inventions, will be reviewed.

The group of inventions described in claims 1 to 6 are linked to each other in the matter described in claim 1, and the group of inventions described in claims 7 to 11 are linked to each other in the matter described in claim 7.

Thus, two inventions classified into the invention of claims 1 to 6 and the invention of claims 7 to 11 are described in the claims of the international application.

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006260909 A
- JP 2006059578 A
- JP 2006504232 T
- JP 2005161203 A
- JP 2004095263 A
- JP 2005050759 A
- JP 2003249231 A
- JP 2004330181 A
- JP 2004362802 A
- JP 2004031174 A
- JP 60031827 A
- JP 2006012773 A
- JP 2005050760 A
- JP 2006120407 A
- JP 2005310418 A
- JP 2004241307 A
- JP 9110982 A
- JP 11116679 A
- JP 11503262 T
- JP 2005126684 A
- JP 2005139432 A
- WO 200695919 A
- JP 2003201403 A
- JP 2003238678 A
- JP 2003282096 A
- JP 2005038834 A
- JP 2006088891 A
- JP 2004089976 A
- WO 2006095919 A
- US 2007061040 A
- US 2007084371 A


### Non-patent literature cited in the description


- **Rajesh Bashyam ; Piotr Zelenay.** *Nature,* 2006, vol. 443, 63-66
- **Jun Maruyama ; Ikuo Abe.** *Chemistry of Materials,* 2006, vol. 18 (5), 1303-1311
- *Journal of Power Sources,* 2006, vol. 153, 11-17
- *Nature,* 2006, vol. 443, 63-66
- *Chemistry of Materials,* 2006, vol. 18 (5), 1303-1311
- Chemical Dictionary. Tokyo Kagaku Dozin Co., Ltd, 1994
- *Tetrahedron,* 1999, vol. 55, 8377
- **Iwanami.** Dictionary of Physics and Chemistry. 1988
- **Shinichi Yoshimura.** Electroconductive Polymers. Kyoritsu Shuppan Co., Ltd,
- Latest Applied Technique of Electroconductive Polyerms. CMC Publishing Co., Ltd,
- Electrochemistry Grasped from Principle. Shokabo Publishing Co., Ltd, 2006
- Dictionary of Physics and Chemistry. Iwanami Shoten, Publishers, 1998
- **P. A. Vigato ; S. Tamburini.** *Coordination Chemistry Reviews,* 2004, vol. 248, 1717-2128
- **Tatsuhiro Okada et al.** *Journal of Inorganic and Organometallic Polymer,* vol. 9 (4), 199-219
- Dictionary of Chemistry. Tokyo Kagaku Dozin Co., Ltd, 1994, 142
- Fuel Cell and Polymer. Kyoritsu Shuppan Co., Ltd, 10 November 2005, 103-112
- **Tatsuhiro Okada et al.** *Journal of Inorganic and Organometallic Polymers,* 1999, vol. 9 (4), 199-219
- *Electrochemical and Solid-State Letters,* 2006, vol. 9 (3), A160-A162
- *J. Appl. Polym. Sci.,* 1974, vol. 18, 1969
- *Polymer Prep.,* 2000, vol. 41 (1), 70